# EUROPEAN PATENT SPECIFICATION

(11) **EP 2 764 240 B1**
(45) Date of publication and mention of the grant of the patent: **16.03.2016**
(21) Application number: 11735920.8
(22) Date of filing: 06.07.2011
(51) Int. Cl.: F04B 17/02, F03C 1/26, F03D 15/00, F04B 1/053, F03D 9/00

(54) **ENERGY EXTRACTION DEVICE, GROUP OF ENERGY EXTRACTION DEVICES AND OPERATING METHODS**
ENERGIEGEWINNUNGSVORRICHTUNG, GRUPPE AUS ENERGIEGEWINNUNGSVORRICHTUNGEN UND BETRIEBSVERFAHREN
DISPOSITIF D'EXTRACTION D'ÉNERGIE, GROUPE DE DISPOSITIFS D'EXTRACTION D'ÉNERGIE ET PROCÉDÉS POUR LES FAIRE FONCTIONNER

(43) Date of publication of application: 13.08.2014
(73) Proprietor: MITSUBISHI HEAVY INDUSTRIES, Ltd., Tokyo 108-8215 (JP)
(72) Inventor: CALDWELL, Niall, Loanhead Midlothian Lothian EH20 9TB (GB); DUMNOV, Daniil, Loanhead Midlothian Lothian EH20 9TB (GB); FIELDING, Michael, Loanhead Midlothian Lothian EH20 9TB (GB); LAIRD, Stephen, Loanhead Midlothian Lothian EH20 9TB (GB); STEIN, Uwe, EH209TBLoanhead Midlothian Lothian EH20 9TB (GB); TAYLOR, Jamie, Loanhead Midlothian Lothian EH20 9TB (GB)
(74) Representative: Hindle, Alistair Andrew
(86) International application number: PCT/JP2011/003888
(87) International publication number: WO 2013/005259

(56) References cited:
- EP-A1- 0 494 236
- JP-A- 2005 248 738
- US-A1- 2009 140 522
- US-A1- 2009 235 655
- US-A1- 2011 142 596

## Description

### Technical Field

The invention relates to the field of energy extraction devices for extracting energy from renewable energy sources, for example, wind turbines, and also to groups of energy extraction devices, such as wind farms. Energy extraction devices according to the invention have a hydraulic transmission including a hydraulic pump driven by a rotating shaft and a hydraulic motor driving a load, such as an electrical generator.

### Background Art

The technical background to the invention will now be discussed with reference to energy extraction devices which are wind turbine generators (WTGs), for extracting energy from the wind, however the same principles will apply to other types of energy extraction device, for extracting energy from other renewable energy sources.

Energy extraction devices for extracting energy from a renewable energy source are typically configured to optimise the amount of power which they extract. However, there are many additional factors which determine the optimum operation of an energy extraction device.

For example, electricity grids typically require to receive continuous and relatively smooth supplies of electricity. Where there are a group of WTGs, it is sufficient for the combined output of the group of WTGs to be smooth, rather than the output from each individual WTG. It is known to use electrical or other storage means to smooth the output from a group of WTGs but this can be expensive. It is known to vary the power received by a WTG to affect the amount of electricity transmitted to an electricity grid, for example by changing the feathering of the blades, or using the mechanical "spinning reserve" of a WTG to provide a short term boost to power output.

However, known methods of controlling WTGs to facilitate smooth power output, or to optimise the total power output of a group of WTGs, involve controlling the power received by a WTG, for example, by changing the speed of rotation (and therefore the torque acting on the turbine blades) or changing the pitch of the blades. This necessarily involves reducing the power received by WTGs to significantly below the maximum amount of power which they could receive, at least some of the time, thereby compromising the efficiency of power generation.

Accordingly, some embodiments of the invention address the technical problem of smoothing the power output from a group of WTGs, or other energy extraction device, while minimising the extent to which energy uptake is compromised.

In the case of a WTG or other energy extraction device which generates electrical power for an electricity grid using an electrical generator, a significant amount of power may be lost due to the operation of the electrical generator, rather than transmitted to the electricity grid. Typical electrical generators consume a significant amount of power independently of their rate of rotation or field current due to so-called 'winding losses'. These losses can be substantial and it is known to provide a wind turbine with two electricity generators and to periodically switch off one of the electricity generators when power output drops below 50% of maximum capacity.

Periodically switching off electrical generators can increase overall efficiency. However, this leads to step changes in power output. Thus, some embodiments of the present invention address the technical problem of providing smooth power output to an electricity grid from one or more energy extraction devices while continuing to extract energy with a high efficiency. In some embodiments, smooth power output is provided despite electrical generators being periodically switched off, to minimise winding losses.

Furthermore, energy flows from renewable energy sources are typically fluctuating energy flows. Wind turbines have various controllable parameters which should ideally be varied over time to enable the wind turbine to optimally extract energy from the wind given the varying wind speed and direction. For example, speed of rotation (which determines torque) may be controlled and many wind turbines are variable pitch. Ideally, these controllable parameters would be varied continuously as the wind speed, and thus the flow of energy from the wind, fluctuates. However, wind turbines typically operate in isolation and it is difficult for an isolated wind turbine to predict future wind speed. Thus, there will always be a difference between the amount of power extracted by an isolated wind turbine and the amount of power which could have been extracted if there was perfect advance knowledge of fluctuations in wind speed. Accordingly, some embodiments of the present invention address the technical problem of optimising the efficiency of power uptake by an individual energy extraction device extracting energy from a fluctuating energy flow. Some embodiments of the present invention address the technical problem of optimising the efficiency of power uptake by a group of energy extraction devices located at a particular installation.

US 2011/0142596 relates to a method for monitoring at least one component to be monitored in a hydraulic circuit filled with a working fluid, the hydraulic circuit comprises at least one pump for circulating the working fluid, wherein the method comprises: changing an operational state of at least one first component in the hydraulic circuit such that a working point of the at least one component to be monitored changes to a predetermined working point; performing at least one measurement for monitoring the at least one component to be monitored. The hydraulic circuit can be in a wind turbine.

### Summary of Invention

According to a first aspect of the invention there is provided an energy extraction device for extracting energy from an energy flow from a renewable energy source, the device comprising a controller and a hydraulic circuit, the hydraulic circuit comprising:
at least one hydraulic pump driven by a rotating shaft, the rotating shaft driven by a renewable energy source,
at least one hydraulic motor driving a load,
a low pressure manifold to route working fluid from the at least one hydraulic motor to the at least one hydraulic pump, and
a high pressure manifold to route fluid from the at least one hydraulic pump to the at least one hydraulic motor;
wherein the or each hydraulic pump and the or each hydraulic motor each comprise a plurality of working chambers of cyclically varying volume and a plurality of valves for regulating the net displacement of working fluid between each working chamber and the high and low pressure manifolds, at least one valve associated with each working chamber being an electronically controlled valve, said electronically controlled valves being operable by the controller to select the volume of working fluid displaced by each said working chamber on each cycle of working chamber volume and thereby regulate the net rate of displacement of working fluid by the at least one hydraulic pump and the at least one hydraulic motor,
the device further comprising at least one working fluid receptacle which is in communication with the high pressure manifold, and characterised by comprising an input interface for receiving a control signal from a device coordinator (601) of an energy extraction Installation comprising a plurality of said energy extraction devices,
an output interface for sending a state of charge signal related to a volume of hydraulic fluid In the working fluid receptacle, the input interfaces and the output interfaces of said energy extraction devices being in communication with the device coordinator to provide information to the device coordinator, to enable the energy extraction devices to be controlled in concert, and wherein
the controller is operable to select the rate of displacement of working fluid by the at least one hydraulic pump and the at least one hydraulic motor such that the relative rate of displacement of working fluid by the at least one hydraulic pump and the at least one hydraulic motor is variable responsive to the received control signal through the input interface.

By allowing the rate of the displacement of working fluid by the at least one hydraulic pump and the at least one hydraulic motor to be varied relative to each other, for at least a period of time, so that the total amount of working fluid displaced into the high pressure manifold by the at least one pump is different to the total amount of working fluid displaced from the high pressure manifold by the at least one motor, power output (through the hydraulic motor) is decoupled, to at least some extent, from power input. Accordingly, individual energy extraction devices according to the first aspect of the invention are externally controllable to at least some extent, to enable power output to be varied without compromising (and typically without changing) power input. This is particularly effective when a plurality of individual energy extraction devices according to the first aspect of the invention are controlled in concert to smooth their combined power output or to achieve other intended effects. Similarly, individual energy extraction devices according to the first aspect of the invention can be better prepared for predicted future variations in the rate of energy flow from the renewable energy source. For example, the rate of rotation of a wind turbine can be varied (by varying the rate of displacement of working fluid by the hydraulic pump) or the torque of a wind turbine can be varied (as the torque is a function of the pressure of working fluid in the high pressure manifold, which increases when more fluid is displaced by the at least one hydraulic pump than by the at least one hydraulic motor).

The control signals received by the input interface may comprise either or both instructions to change one or more operating modes or the controller, and parameters taken into account by the controller.

The high pressure manifold is in (continuous or selectable) communication with at least one working fluid receptacle. Thus, when the or each hydraulic pump displaces more working fluid than the at least one hydraulic motor, working fluid is stored in the or each working fluid receptacle. When the at least one hydraulic motor displaces more working fluid than the at least one hydraulic pump, working fluid enters the high pressure manifold from the or each working fluid receptacle. Thus, by controlling the relative rate of displacement of working fluid by the at least one hydraulic pump and the at least one hydraulic motor, the controller can determine the rate of flow of working fluid into or out of the at least one working fluid receptacle, taking into account control signals received from a device coordinator, allowing the device to be controlled in concert with other devices at the same installation. Nevertheless, even without at least one working fluid receptacle in communication with the high pressure manifold, there will typically be at least a limited capacity for the at least one hydraulic pump and the at least one hydraulic motor to displace different amounts of hydraulic fluid for a limited period of time. The high pressure manifold may be in continuous communication with the high pressure manifold although this may be interruptible, for example, the high pressure manifold may be in communication with at least one said working fluid receptacle through one or more valves.

The at least one working fluid receptacle typically comprises at least one pressurisable container having a working fluid retaining volume which varies with the volume of working fluid retained in the or each working fluid receptacle. Thus, the pressure within the one or more pressurisable working fluid receptacles is typically a function of the amount of working fluid stored in the one or more working fluid receptacles. This function is typically monotonic with the pressure being higher as the amount of working fluid stored in the at least one working fluid receptacle increases. This allows the pressure within the at least one working fluid receptacle, and the pressure within the high pressure manifold with which the at least one working fluid receptacle is in communication, to vary. The or each pressurisable container may be a gas-charged oleo-pneumatic accumulator filled at one end with pressurised nitrogen or other gases, a length of rubber and rigid hose or a fluid volume, or may be another device suitable for storing pressurised hydraulic fluid in which the pressure of the hydraulic fluid increases with increasing storage of hydraulic fluid by the device.

The or each pressurisable container may have a liquid retaining surface comprising at least one elastically deformable region. For example, the or each pressurisable container may comprise a resilient gas retaining chamber. Typically, working fluid within the working fluid receptacle is in fluid communication with working fluid within the high pressure manifold. Thus, the pressure of liquid within the high pressure manifold and the working fluid receptacle is typically substantially the same.

It may be that the controller controls the relative rate of displacement of working fluid by the at least one hydraulic pump and the at least one hydraulic motor to regulate the pressure in the high pressure manifold. For example, the controller may control the at least one hydraulic pump and the at least one hydraulic motor to maintain the pressure in the high pressure manifold within a range, or so that it tends to a target value. It may be that the controller changes the way in which it controls the at least one hydraulic pump and the at least one hydraulic motor to regulate the pressure in the high pressure manifold in response to the control signals. For example, it may increase, decrease or change a target pressure or range of pressures responsive to the control signals. Thus, at least some of the control signals may relate to a target level of pressure or range of pressures within the high pressure manifold of the energy extraction device. At least some of the control signals may be instructions to change one or more operating modes of the controller, or parameters taken into account by the controller, when controlling the relative rate of displacement of working fluid by the at least one hydraulic pump and the at least one hydraulic motor to regulate the pressure in the high pressure manifold. The controller may execute a pressure control algorithm which takes into account the current pressure in the high pressure manifold when determining the net rate of displacement of working fluid by the at least one hydraulic pump and the at least one hydraulic motor and the pressure control algorithm may be changed responsive to the control signals.

The energy extraction device has an output interface through which a state of charge signal, related to the volume of hydraulic fluid within the at least one working fluid receptacle, is output in use. Accordingly, the energy extraction device may generate a state of charge signal which can be relayed to a device coordinator, providing information to the device coordinator to enable the energy extraction device, and other energy extraction devices within an installation, to be controlled in concert, to optimise one or more parameters of the installation as a whole, such as energy conversion efficiency, or smoothness of power output.

The state of charge signal related to the volume of hydraulic fluid within the at least one working fluid receptacle could be a measurement of any parameter which varies with the volume of hydraulic fluid within the at least one working fluid receptacle. For example, the state of charge signal may be representative of one or more of the pressure in the high pressure manifold, the pressure in at least one said working fluid receptacle, the amount of working fluid stored in the at least one working fluid receptacle, and the amount of unfilled capacity of the at least one working fluid receptacle.

The energy extraction device may have an output interface (which may also be the said output interface) through which a power absorption signal, related to the power being received by the energy extraction device through the hydraulic pump, is output in use.

The power absorption signal typically relates to instantaneous power absorption, although it may be averaged over a period of time. The power absorption signal may be any signal related to power absorption, for example, a signal representative of the angular velocity of the turbine blades (in the case of a device such as a wind turbine generator in which the rotating shaft is coupled to a turbine), wind speed or water flow rate (in the case of a wind turbine generator or a turbine generator for generating energy from flowing water respectively), blade pitch, torque in the rotating shaft, fluid displacement by the pump etc. In some cases (e.g. where the power absorption signal is a signal representative of the fluid displacement by the pump) the power absorption signal is not independent of the state of charge signal. In this case, the power received by the device can be determined by the device coordinator from the power absorption signal and the state of charge signal.

It may be that, at least in a first operating mode, the controller determines the relative rate of displacement of working fluid by the at least one hydraulic pump and the at least one hydraulic motor by varying the rate of displacement of working fluid by the at least one hydraulic motor independently of the rate of displacement of working fluid by the at least one hydraulic pump.

The energy extraction device typically selects the displacement of working fluid by the at least one hydraulic pump to optimise the power received by the energy extraction device, for example, by controlling the torque through the rotating shaft, at least in a normal operating mode. The optimisation may be for optimal instantaneous energy efficiency or optimal energy efficiency over a period of time, for example, for the duration of an expected gust. Thus, by determining the displacement of working fluid by the at least one hydraulic motor independently of the rate of displacement of working fluid by the at least one hydraulic pump, the output power of the energy extraction device can be varied without compromising the extraction of energy from the renewable energy source.

It may be that the load is a power generating machine (e.g. an electrical generator) and the controller is configured to regulate the electronically controlled valves to cause at least one hydraulic motor to enter a dormant state (in which the net rate of displacement of working fluid is relatively low, e.g. zero) to cause the power generating machine to stop generating power, responsive to a control signal, while continuing to cause the at least one hydraulic pump to receive energy for the renewable energy flow.

Power generating machines, such as electrical generators, can have significant power consumption at low throughput. Thus, the energy extraction device may stop generating power using a generator (for example, shutting it down) for a period of time, while continuing to receive power, storing the balance of working fluid in a hydraulic liquid receptacle and then switch on the electrical generator, or other machine, and drive the generator, or other machine, once more.

It may be that, in at least one (first) operating mode, at least one said hydraulic motor is operated alternately in a first, dormant state, having low or no displacement and a second, active state which has substantially the same rate of net rate of displacement of working fluid on successive occasions (the net rate of displacement of working fluid in the second, active state may vary significantly over longer periods of time). The net rate of displacement of working fluid by a or the hydraulic motor is typically selected to provide the maximum sustainable power output by the hydraulic motor to the load.

It may be that, in a second operating mode, the controller determines the relative rate of displacement of working fluid by the at least one hydraulic pump and the at least one hydraulic motor by varying the rate of displacement of working fluid by the at least one hydraulic pump responsive to the received control signal. This may, for example, allow the torque exerted on the rotating shaft (and thus turbine blades coupled to the rotating shaft) to be regulated independently of power output.

As the high pressure manifold is in communication with at least one working fluid receptacle, it may be that the energy extraction device operates in the first operating mode by default, but operates in the second operating mode responsive to determining that the at least one hydraulic liquid receptacle is near capacity.

The energy extraction device may determine that the at least one hydraulic liquid receptacle is near capacity when the pressure in the high pressure manifold exceeds a threshold.

It may be that the controller determines the relative rate of displacement of working fluid by the at least one hydraulic pump and the at least one hydraulic motor so that the pressure in the high pressure manifold tends towards a target pressure, whereupon, in at least one operating mode, the target pressure is determined by a received control signal.

It may be that the energy extraction device is a wind turbine generator. Turbine blades may be coupled to the rotating shaft. However, the energy extraction device may be another type of energy extraction device for extracting energy from an energy flow from a renewable energy source, for example a turbine for extracting energy from flowing liquid, such as a tidal turbine generator.

According to a second aspect of the invention there is provided an installation comprising a plurality of energy extraction devices according to the first aspect of the invention, and a device coordinator in communication with the plurality of energy extraction devices and operable to transmit said control signals to individual groups of one or more said energy extraction devices.

Thus, the device coordinator may control individual groups of one or more said energy extraction devices. This may, for example, be used to generate a smoother power output, or to hold a predetermined amount of energy in reserve (as pressurised working fluid within the one or more hydraulic receptacles) in order to be able to temporarily supply additional power to an electricity grid on demand, or to optimise power extraction of the energy extraction devices as a whole given additional constraints, such as the need to provide smooth combined power output.

It may be that the inputs interfaces and output interfaces of the plurality of energy extraction devices are in communication with the device coordinator to provide information to the device coordinator and receive control signals from the device coordinator, to enable a plurality of energy extraction devices within an installation to be controlled in concert, to optimise one or more parameters of the installation as a whole.

Typically, a single device coordinator will be provided for each installation, although multiple device co-ordinators may be employed. The individual groups of one or more said energy extraction devices may be controlled in concert. The device coordinator may be distributed, for example, distributed between some or all of the energy extraction devices in an installation. Nevertheless, an installation may comprise multiple device coordinators, coordinating a subset of the energy extraction devices at the installation.

Typically, the said loads comprise electricity generators, some or all of which are connected to a shared power output (e.g. an electricity grid) and the device coordinator transmits controls signals to individual groups of one or more said energy extraction devices to smooth the output of power to the shared power output.

Variations in the power output from energy extraction devices arise from a number of factors. For example, individual energy extraction devices may receive different amounts of energy. Where the said loads are electricity generators which are switched between a dormant state and an active state (e.g. to minimise or avoid running generators at a low proportion of their maximum power output, when so-called winding losses may be substantial) the device coordinator may transmit control signals selected to control the switching of electricity generators between a dormant state and an active state to smooth the output power, e.g. so that a generator of a first energy extraction device is switched into the active state when a generator of a second energy device is switched into the dormant state. It may be that some or all of the energy extraction devices have a plurality of hydraulic motors, each of which drives a respective electricity generator, and the device coordinator transmits control signals which, in some circumstances, cause an individual energy extraction device to switch a subset of its plurality of electricity generators from the active state to the dormant state or vice versa.

The said high pressure manifold of each of the plurality of energy extraction devices is in communication with at least one respective working fluid receptacle. The installation may comprise one or more further energy extraction devices without this feature.

Preferably, the device coordinator is operable, in at least some circumstances, to transmit different control signals to a first and a second group of one or more said energy extraction devices to cause the first group to fill their respective working fluid receptacles to a greater proportion of their maximum capacity than the second group, while both groups of energy extraction devices extract energy from the renewable energy source. Thus, energy extraction devices can be individually controlled in concert to optimise one or more aspects of the performance (e.g. the output power, or the smoothness of output power, or typically a combination of both) of the energy extraction devices at the installation as a whole.

There are a number of circumstances in which this is advantageous. For example, in advance of a gust of wind it may be preferable for the amount of working fluid stored in the second group of one or more energy extraction devices to be depleted, to enable energy retrieved from the gust of wind to be stored. This may also be done to enable the output of power to a said shared power output to be smoothed, by ensuring that there are some energy extraction devices which can provide output power continuously while other energy extraction devices receive more energy through the rotating shaft than they output to the load.

By a group of one or more energy extraction devices we include the possibility that a group (e.g. the first and/or second group) consists of a single energy extraction device. There may be more than two groups of one or more energy extraction devices to which different control signals are transmitted. Control signals sent to a group of more than one energy extraction device can be sent to the whole group, or as separate signals to individual energy extraction devices in the group, for example.

In embodiments where at least some of the control signals relate to a target level of pressure or range of pressures within the high pressure manifold of an energy extraction device, the method may comprise sending control signals indicative of a different target level of pressure or different range of pressures within the high pressure manifold to different groups of one or more energy extraction devices.

In embodiments where at least some of the control signals are instructions to change one or more operating modes of the controller, or parameters taken into account by the controller, when controlling the relative rate of displacement of working fluid by the at least one hydraulic pump and the at least one hydraulic motor to regulate the pressure in the high pressure manifold, the method may comprise transmitting different control signals to different groups of one or more energy extraction devices so that their controllers operate in different operating modes or take into account different values of parameters when controlling the relative rate of displacement of working fluid by the at least one hydraulic pump and the at least one hydraulic motor to regulate the pressure in the high pressure manifold.

In embodiments where the controller executes a pressure control algorithm which takes into account the current pressure in the high pressure manifold when determining the net rate of displacement of working fluid by the at least one hydraulic pump and the at least one hydraulic motor, the method may comprise transmitting different control signals to different groups of one or more energy extraction devices so that the pressure control algorithm is changed in a different way in the different groups of one or more energy extraction device.

It may be that the device coordinator is operable to predict a temporary change in the amount of energy from the energy flow which will be received by a group of one or more energy extraction devices (e.g. in the case of a wind turbine farm, to predict that a gust of wind will pass one or more wind turbines) and to change the control signals to the respective group of one or more energy extraction devices such as to cause the group of one or more energy extraction devices to reduce the amount of working fluid stored in their respective working fluid receptacles in advance of (at least the peak of) the predicted temporary change in the amount of energy to be received.

Individual energy extraction devices will typically store an optimum amount of working fluid in their working fluid receptacles for efficiently receiving energy from a substantially steady state energy flow. The optimum may be determined by the volume of stored working fluid which leads to a target pressure in the high pressure manifold. This is important because the pressure in the high pressure manifold affects the torque generated by the hydraulic pump which in turn affects the efficiency of energy uptake. Typically, the target pressure increases as the rate of energy flow increases, across at least the majority of an operating pressure range of the energy extraction device. However, this may cause the energy extraction device to be unable to receive all energy from the energy flow at optimum efficiency during the temporary change in the amount of energy to be received, for example, because the hydraulic fluid receptacle or receptacles become close to or reach maximum capacity, in which case the efficiency of the receipt of power must be reduced to avoid breaching maximum capacity. By predicting temporary changes in the amount of energy to be received and sending appropriate control signals, the amount of working fluid stored in the at least one hydraulic fluid receptacle of each energy extraction device can be reduced in advance of the temporary change, allowing more energy to be received and thereby increasing overall energy efficiency.

It may be that a group of the said energy extraction devices each have at least one operating mode, in which the or each hydraulic motor is operated alternately in a first, dormant state, having low or no displacement and a second, active state which has substantially the same net rate of displacement of working fluid on successive occasions and the device coordinator is operable to generate control signals to control the switching of a or the or each hydraulic motor between the first, dormant node and the second, active state, to smooth the sum of the output power of the group of the said energy extraction devices. Thus, at least some of the control signals may be signals indicative that a hydraulic motor should be switched from a first, dormant state, to a second, active state, or vice versa. It may be that in at least some circumstances, there is at least one further energy extraction device in which at least one hydraulic motor is operated at a displacement between the displacement of the first dormant state and the second active state so that the total output power is not limited to one of only a finite range of values, but the majority of energy extract device generators are nevertheless operating in either the first dormant state or the second active state with at least one in each said mode so as to maximise energy efficiency.

According to a third aspect of the invention there is provided a method of controlling an energy extraction device for extracting energy from an energy flow from a renewable energy source, the device comprising a controller and a hydraulic circuit, the hydraulic circuit comprising:
at least one hydraulic pump driven by a rotating shaft, the rotating shaft driven by a renewable energy source,
at least one hydraulic motor driving a load,
a low pressure manifold to route working fluid from the hydraulic motor to the hydraulic pump, and
a high pressure manifold to route fluid from the hydraulic pump to the hydraulic motor; wherein the at least one hydraulic pump and the at least one hydraulic motor each comprise a plurality of working chambers of cyclically varying volume and a plurality of valves for regulating the net displacement of working fluid between each working chamber and the high and low pressure manifolds, at least one valve associated with each working chamber being an electronically controlled valve, said electronically controlled valves being operable by the controller to select the volume of working fluid displaced by each said working chamber on each cycle of working chamber volume and thereby regulate the net rate of displacement of working fluid by the at least one the hydraulic pump and the at least one hydraulic motor,
the device further comprising at least one fluid working receptacle which is in communication with the high pressure manifold, an input interface for receiving a control signal from a device coordinator of an energy extraction installation comprising a plurality of said energy extraction devices, an output interface for sending a state of charge signal related to a volume of hydraulic fluid in the working fluid receptacle, the input interfaces and the output interfaces of said energy extraction devices being In communication with the device coordinator to provide information to the device coordinator, to enable the energy extraction devices to be controlled in concert, the method
characterised by receiving a control signal and selecting the relative rate of displacement of working fluid by the at least one hydraulic pump and the at least one hydraulic motor responsive to the received control signal.

Typically, the high pressure manifold is in communication with a working fluid receptacle.

It may be that the controller controls the relative rate of displacement of working fluid by the at least one hydraulic pump and the at least one hydraulic motor to regulate the pressure in the high pressure manifold. For example, the controller may control the at least one hydraulic pump and the at least one hydraulic motor to maintain the pressure in the high pressure manifold within a range, or so that it tends to a target value. It may be that the controller changes the way in which is controls the at least one hydraulic pump and the at least one hydraulic motor to regulate the pressure in the high pressure manifold in response to the control signals. For example, it may increase, decrease or change a target pressure or range of pressures responsive to the control signals. Thus, at least some of the control signals may relate to a target level of pressure or range of pressures within the high pressure manifold of the energy extraction device. At least some of the control signals may be instructions to change one or more operating modes of the controller, or parameters taken into account by the controller, when controlling the relative rate of displacement of working fluid by the at least one hydraulic pump and the at least one hydraulic motor to regulate the pressure in the high pressure manifold. The controller may execute a pressure control algorithm which takes into account the current pressure in the high pressure manifold when determining the net rate of displacement of working fluid by the at least one hydraulic pump and the at least one hydraulic motor and the pressure control algorithm may be changed responsive to the control signals.

The method may further comprise outputting a state of charge signal, related to the volume of hydraulic fluid within the working fluid receptacle. The state of charge signal may be relayed to a device coordinator which coordinates individual energy extraction devices or groups thereof. The state of charge signal may, for example, be representative of one or more of the pressure in the high pressure manifold, the pressure in the working fluid receptacle, the amount of working fluid stored in the working fluid receptacle, and the amount of unfilled capacity of the working fluid receptacle.

The method may further comprise outputting a power absorption signal, related to the power being received by the energy extraction device through one or more of the at least one hydraulic pump, is output in use.

It may be that, at least in an operating mode, the relative rate of displacement of working fluid by the at least one hydraulic pump and the at least one hydraulic motor is determined by varying the rate of displacement of working fluid by the at least one hydraulic motor independently of the varying rate of displacement of working fluid by the at least one hydraulic pump.

It may be that the load is a power generating machine (e.g. an electrical generator) and a or the hydraulic motor is switched between a dormant state (in which the net rate of displacement of working fluid is relatively low, e.g. zero) and an active state, while continuing to cause the at least one hydraulic pump to receive energy for the renewable energy flow. Thus, the or each respective hydraulic motor may be switched to a dormant state during selected period of time to avoid or minimise energy losses due to operating a power generating machine at low efficiency (e.g. due to 'winding losses' in an electrical generator) while the energy extraction device continues to receive energy. The method may comprise switching one or more hydraulic motors from the said dormant state to the said active state, or vice versa, responsive to receipt of a said control signal.

It may be that the controller determines the relative rate of displacement of working fluid by the at least one hydraulic pump and the at least one hydraulic motor by varying the rate of displacement of working fluid by the at least one hydraulic pump responsive to the received control signal, in only some circumstances.

As the high pressure manifold is in communication with a working fluid receptacle, it may be that the relative rate of displacement of working fluid by the at least one hydraulic pump and the at least one hydraulic motor is determined by varying the rate of displacement of working fluid by the at least one hydraulic motor independently of the rate of displacement of working fluid by the at least one hydraulic pump by default but the rate of displacement of working fluid by at least one the hydraulic pump is varied to reduce the reduce the amount of working fluid stored in the working fluid receptacle when the volume of working fluid stored in the working fluid receptacle exceeds a threshold.

It may be that the relative rate of displacement of working fluid by the at least one hydraulic pump and the at least one hydraulic motor is determined so that the pressure in the high pressure manifold tends towards a target pressure, whereupon, in at least one operating mode, the target pressure is determined by the received control signal.

The invention extends in a fourth aspect to a method of controlling a plurality of energy extraction devices according to the first aspect of the invention, the method comprising relaying said control signals from a device coordinator to individual groups or one or more said energy extraction devices.

It may be that the high pressure manifold of each of the plurality of energy extraction devices is in communication with a respective working fluid receptacle and the method further comprises relaying state of charge signals, related to the volume of hydraulic fluid within the or each respective working fluid receptacle, from the said plurality of energy extraction devices to the device coordinator.

The method may further comprise relaying power absorption signals, related to the absorption of power by the respective energy extraction device, to the device coordinator, and taking this into account when determining the control signals relayed to a plurality of groups of one or more energy extraction devices.

The method may further comprise relaying additional data concerning measured data from each energy extraction device to the device coordinator and taking this into account when determining the control signals relayed to a plurality of groups of one or more energy extraction devices. The measured data may, for example, be a measurement of wind speed, rate of water flow, or the amplitude of a wave (as appropriate).

It may be that the method further comprises relaying data concerning predictions of future variations in the respective energy flow or demand for power output from the device coordinator to individual groups of one or more energy extraction devices, the respective energy extraction devices taking the said relayed data that they receive into account when controlling the rate of displacement of working fluid by the hydraulic motor, the relative rate of displacement of working fluid by the hydraulic pump and the hydraulic motor, a target value of pressure within the high pressure, and/or a target volume of working fluid to be retained within the at least one working fluid receptacle.

In embodiments where the said loads comprise electricity generators, connected to a shared power output, the method may comprise transmitting controls signals to individual groups of one or more said energy extraction devices to smooth the output of power to the shared power output. In embodiments where the load of the one or more said energy extraction devices is a power generating machine (e.g. an electrical generator) the method may comprise transmitting control signals to the energy extraction devices to switch hydraulic motors of the energy extraction devices between a dormant state (in which the net rate of displacement of working fluid is relatively low, e.g. zero) and an active state, wherein the timing of the transmitted control signals is selected to smooth the output of power to the shared power output.

The method may comprise receiving demand data concerning the power output and transmitting control signals to individual groups of one or more said energy extraction devices to meet a demand represented by the demand data.

In embodiments where the high pressure manifold of each energy extraction device is in communication with a respective working fluid receptacle, the method may comprise transmitting different control signals to a first and a second group of one or more said energy extraction devices, in at least some circumstances, to cause the first group to fill their respective working fluid receptacles to a greater proportion of their maximum capacity than the second group, while both groups of energy extraction devices extract energy from the renewable energy source. A said control signal may, for example, comprise an instruction to switch a motor from a dormant state to an active state, and thereby start up a generator driven by the motor, or vice versa.

In embodiments where the high pressure manifold of each energy extraction device is in communication with a respective working fluid receptacle, the method may comprise predicting a temporary change in the amount of energy from the energy flow which will be received by a group of one or more energy extraction devices and selecting the control signals to the respective group of one or more energy extraction devices such as to cause the group of one or more energy extraction devices to reduce the amount of working fluid stored in their respective working fluid receptacles in advance of (at least the peak of) the predicted temporary change in the amount of energy to be received.

Optional features discussed in relation to any aspect of the invention are optional features of any of the aspects of the invention.

### Brief Description of Drawings

An example embodiment of the present invention will now be illustrated with reference to the following Figures in which:
[fig.1]Figure 1 shows the a wind turbine generator connected to an electricity network and implementing the invention;
[fig.2]Figure 2 shows a hydraulic motor for use in the wind turbine generator of Figure 1;
[fig.3]Figure 3 shows a section of a pump for use in the wind turbine generator of Figure 1;
[fig.4A]Figure 4A shows the computational steps for one time-step of an algorithm implementing the invention;
[fig.4B]Figure 4B shows the computational steps for one time-step of an algorithm implementing the invention;
[fig.5]Figure 5 is a schematic of the signal flow in a controller implementing the invention;
[fig.6]Figure 6 shows some alternative target pressure functions;
[fig.7]Figure 7 shows a wind farm making use of the invention;
[fig.8]Figure 8 shows the operation of the invention for providing a smooth power output of the wind farm of Figure 7 when a gust moves through the farm; and
[fig.9]Figure 9 shows the operation of the invention for providing a smooth power output of the wind farm of Figure 7 when the generators are operated in a cycling start stop mode.

### Description of Embodiments

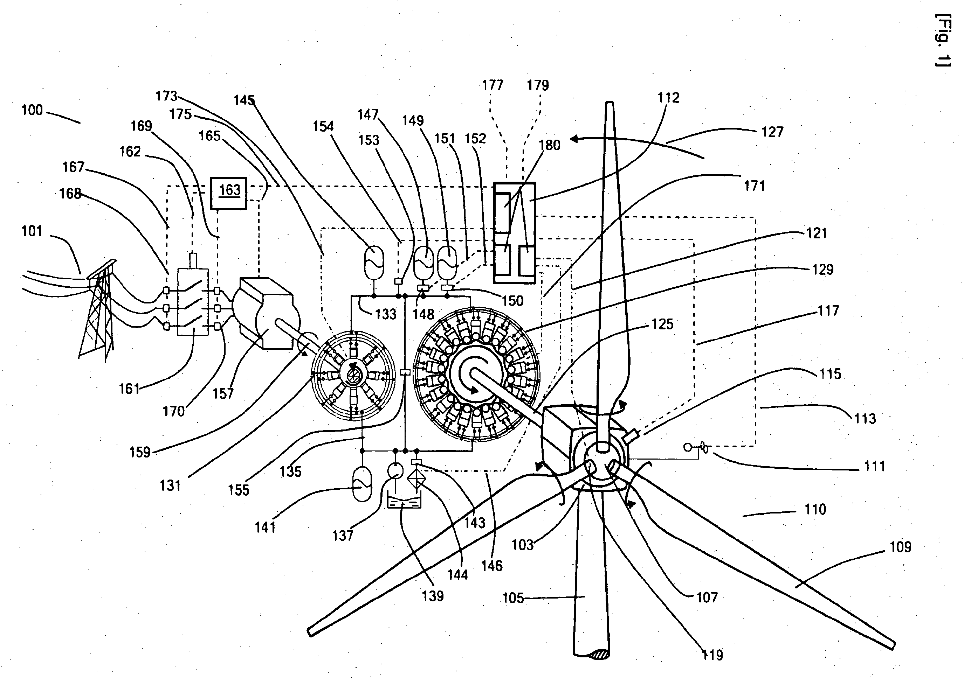

Figure 1 illustrates an example embodiment of the invention in the form of a Wind Turbine Generator (WTG, 100), functioning as the energy extraction device, and connected to an electricity network (101). The WTG comprises a nacelle (103) rotatably mounted to a tower (105) and having mounted thereon a hub (107) supporting three blades (109) known collectively as the rotor (110). An anemometer (111) attached externally to the nacelle provides a measured wind speed signal (113) to a controller (112). A rotor speed sensor (115) at the nacelle provides the controller with a rotor speed signal (117, representative of the current rotation rate of the rotating shaft). In the example system the angle of attack of each of the blades to the wind can be varied by a pitch actuator (119), which exchanges pitch actuation signals and pitch sensing signals (121) with the controller. The invention could be applied to a WTG without a pitch actuator.

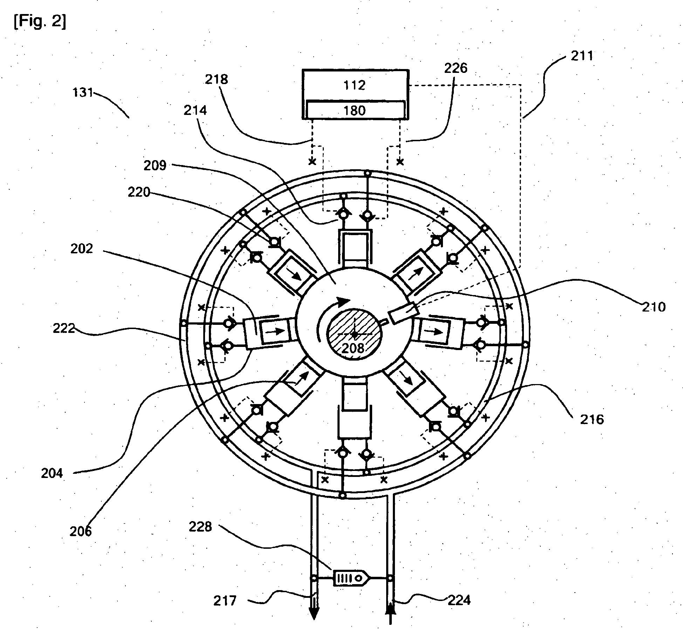

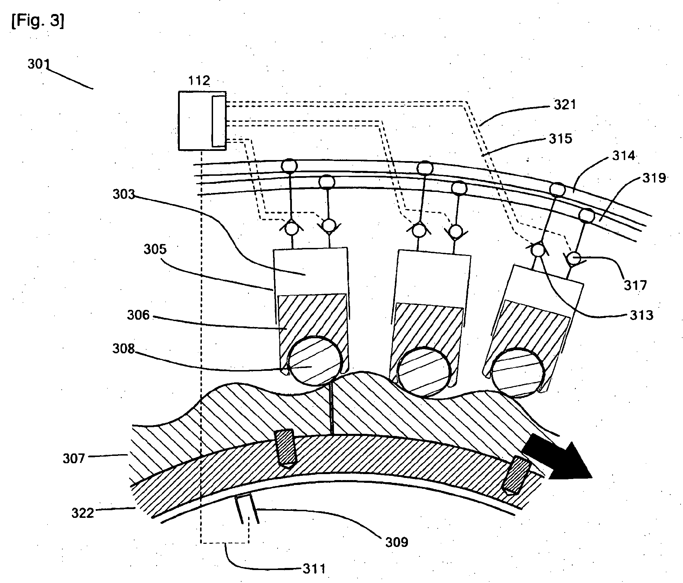

The hub is connected directly to a pump (129), through a rotor shaft (125), acting as the rotatable shaft, which rotates in the direction of rotor rotation (127). The pump is preferably of the type described with reference to Figure 3, and has a fluid connection to a hydraulic motor (131), preferably of the type described with reference to Figure 2. The fluid connection between the pump and the hydraulic motor is through a high pressure manifold (133) and a low pressure manifold (135), connected to their high pressure port and low pressure port respectively, and is direct in the sense that there are no intervening valves to restrict the flow. The pump and hydraulic motor are preferably mounted directly one to the other so that the high pressure manifold and low pressure manifold are formed between and within them. A charge pump (137) continuously draws fluid from a reservoir (139) into the low pressure manifold, which is connected to a low pressure accumulator (141). A low pressure relief valve (143) returns fluid from the low pressure manifold to the reservoir through a heat exchanger (144) which is operable to influence the temperature of the working fluid and is controllable by the controller via a heat exchanger control line (146). The high pressure manifold, low pressure manifold, pump, motor and reservoir form a hydraulic circuit. A smoothing accumulator (145) is connected to the high pressure manifold between the pump and the hydraulic motor. A first high pressure accumulator (147) and a second high pressure accumulator (149) (each acting as a working fluid receptacle) are connected to the high pressure manifold through a first isolating valve (148) and a second isolating valve (150) respectively. The first and second high pressure accumulators may have different precharge pressures, and there may be additional high pressure accumulators with an even wider spread of precharge pressures. The states of the first and second isolating valves are set by the controller through first (151) and second (152) isolating valve signals respectively. Fluid pressure in the high pressure manifold is measured with a pressure sensor (153), which provides the controller with a high pressure manifold pressure signal (154). The pressure sensor may optionally also measure the fluid temperature and provide a fluid temperature signal to the controller. A high pressure relief valve (155) connects the high pressure and low pressure manifolds.

The hydraulic motor is connected to a generator (157), acting as the load, through a generator shaft (159). The generator is connected to an electricity network through a contactor (161), which receives a contactor control signal (162) from a generator and contactor controller (163) and is operable to selectively connect the generator to or isolate the generator from the electricity network. The generator and contactor controller receives measurements of voltage, current and frequency from electricity supply signals (167) and generator output signals (169), measured by electricity supply sensors (168) and generator output sensors (170) respectively, communicates them to the controller (112) and controls the output of the generator by adjusting field voltage generator control signals (165) in accordance with generator and contactor control signals (175) from the controller.

The pump and motor report the instantaneous angular position and speed of rotation of their respective shafts, and the temperature and pressure of the hydraulic oil, to the controller, and the controller sets the state of their respective valves, via pump actuation signals and pump shaft signals (171) and motor actuation signals and motor shaft signals (173). The controller receives coordinating signals (177) and sends monitoring signals (179), from and to respectively a farm controller (not shown in this figure). The monitoring signals typically comprise the pressure Pₛ of the high pressure manifold and the pressure P_{acc} of the accumulators, as well as the rotor speed wᵣ. Of course the monitoring signals may further comprise any values useful for monitoring the status and function of the WTG. The controller uses power amplifiers (180) to amplify the pitch actuation signals, the isolating valve signals, the pump actuation signals and the motor actuation signals.

Figure 2 illustrates the hydraulic motor (131) in the form of an electronically commutated hydraulic pump/motor comprising a plurality of working chambers (202, designated individually by letters A to H) which have volumes defined by the interior surfaces of cylinders (204) and pistons (206) which are driven from a rotatable shaft (208) by an eccentric cam (209) and which reciprocate within the cylinders to cyclically vary the volume of the working chambers. The rotatable shaft is firmly connected to and rotates with the generator shaft (159). The hydraulic motor may comprise a plurality of axially-spaced banks of working chambers driven from the same shaft by similarly spaced eccentric cams. A shaft position and speed sensor (210) determines the instantaneous angular position and speed of rotation of the shaft, and through signal line (211, being some of the motor actuation and motor shaft signals 173) informs the controller (112), which enables the controller to determine the instantaneous phase of the cycles of each working chamber. The controller is typically a microprocessor or microcontroller, which executes a stored program in use. The controller can take the form of a plurality of microprocessors or microcontrollers which may be distributed and which individually carry out a subset of the overall function of the controller.

The working chambers are each associated with Low Pressure Valves (LPVs) in the form of electronically actuated face-sealing poppet valves (214), which face inwards toward their associated working chamber and are operable to selectively seal off a channel extending from the working chamber to a low pressure conduit (216), which functions generally as a net source or sink of fluid in use and may connect one or several working chambers, or indeed all as is shown here, to a low pressure port (217) which is fluidically connected to the low pressure manifold (135) of the WTG. The LPVs are normally open solenoid closed valves which open passively when the pressure within the working chamber is less than or equal to the pressure within the low pressure manifold, i.e. during an intake stroke, to bring the working chamber into fluid communication with the low pressure manifold, but are selectively closable under the active control of the controller via LPV control lines (218, being some of the motor actuation and motor shaft signals 173) to bring the working chamber out of fluid communication with the low pressure manifold. Alternative electronically controllable valves may be employed, such as normally closed solenoid opened valves.

The working chambers are each further associated with High Pressure Valves (HPVs) (220) in the form of pressure actuated delivery valves. The HPVs open outwards from the working chambers and are operable to seal off a channel extending from the working chamber to a high pressure conduit (222), which functions as a net source or sink of fluid in use and may connect one or several working chambers, or indeed all as is shown here, to a high pressure port (224, acting as the inlet of the hydraulic motor) which is in fluid communication with the high pressure manifold (133). The HPVs function as normally-closed pressure-opening check valves which open passively when the pressure within the working chamber exceeds the pressure within the high pressure manifold. The HPVs also function as normally-closed solenoid opened check valves which the controller may selectively hold open via HPV control lines (226, being some of the motor actuation and motor shaft signals 173) once that HPV is opened by pressure within the associated working chamber. Typically the HPV is not openable by the controller against pressure in the high pressure manifold. The HPV may additionally be openable under the control of the controller when there is pressure in the high pressure manifold but not in the working chamber, or may be partially openable, for example if the valve is of the type and is operated according to the method disclosed in WO 2008/029073 or WO 2010/029358.

In a normal mode of operation described in, for example, EP 0 361 927, EP 0 494 236, and EP 1 537 333,
the controller selects the net rate of displacement of fluid from the high pressure manifold by the hydraulic motor by actively closing one or more of the LPVs shortly before the point of minimum volume in the associated working chamber's cycle, closing the path to the low pressure manifold which causes the fluid in the working chamber to be compressed by the remainder of the contraction stroke. The associated HPV opens when the pressure across it equalises and a small amount of fluid is directed out through the associated HPV. The controller then actively holds open the associated HPV, typically until near the maximum volume in the associated working chamber's cycle, admitting fluid from the high pressure manifold and applying a torque to the rotatable shaft. In an optional pumping mode the controller selects the net rate of displacement of fluid to the high pressure manifold by the hydraulic motor by actively closing one or more of the LPVs typically near the point of maximum volume in the associated working chamber's cycle, closing the path to the low pressure manifold and thereby directing fluid out through the associated HPV on the subsequent contraction stroke (but does not actively hold open the HPV). The controller selects the number and sequence of LPV closures and HPV openings to produce a flow or create a shaft torque or power to satisfy a selected net rate of displacement. As well as determining whether or not to close or hold open the LPVs on a cycle by cycle basis, the controller is operable to vary the precise phasing of the closure of the HPVs with respect to the varying working chamber volume and thereby to select the net rate of displacement of fluid from the high pressure to the low pressure manifold or vice versa.

Arrows on the ports (217,224) indicate fluid flow in the motoring mode; in the pumping mode the flow is reversed. A pressure relief valve (228) may protect the hydraulic motor from damage.

Figure 3 illustrates in schematic form a portion (301) of the pump (129) with electronically commutated valves. The pump consists of a number of similar working chambers (303) in a radial arrangement, of which only three are shown in the portion in Figure 3. Each working chamber has a volume defined by the interior surface of a cylinder (305) and a piston (306), which is driven from a ring cam (307) by way of a roller (308), and which reciprocates within the cylinder to cyclically vary the volume of the working chamber. The ring cam may be formed from individual segments mounted on the shaft (322), which is firmly connected to the rotor shaft (125). There may be more than one bank of radially arranged working chambers, arranged axially along the shaft. Fluid pressure within the low pressure manifold, and thus the working chambers, greater than the pressure surrounding the ring cam, or alternatively a spring (not shown), keeps the roller in contact with the ring cam. A shaft position and speed sensor (309) determines the instantaneous angular position and speed of rotation of the shaft, and informs a controller (112), by way of electrical connection (311, being some of the pump actuation and pump shaft signals 171), which enables the controller to determine the instantaneous phase of the cycles of each individual working chamber. The controller is typically a microprocessor or microcontroller, which executes a stored program in use. The controller can take the form of a plurality of microprocessors or microcontrollers which may be distributed and which individually carry out a subset of the overall function of the controller.

Each working chamber comprises a low pressure valve (LPV) in the form of an electronically actuated face-sealing poppet valve (313) which faces inwards toward the working chamber and is operable to selectively seal off a channel extending from the working chamber to a low pressure conduit (314), which functions generally (in the pumping mode) as a net source of fluid in use (or sink in the case of motoring). The low pressure conduit is fluidically connected to the low pressure manifold (135). The LPV is a normally open solenoid closed valve which opens passively when the pressure within the working chamber is less than the pressure within the low pressure conduit, during an intake stroke, to bring the working chamber into fluid communication with the low pressure manifold, but is selectively closable under the active control of the controller via an electrical LPV control signal (315, being some of the pump actuation and pump shaft signals 171) to bring the working chamber out of fluid communication with the low pressure manifold. Alternative electronically controllable valves may be employed, such as normally closed solenoid opened valves.

The working chamber further comprises a high pressure valve (HPV, 317) in the form of a pressure actuated delivery valve. The HPV faces outwards from the working chamber and is operable to seal off a channel extending from the working chamber to a high pressure conduit (319), which functions as a net source or sink of fluid in use and is in fluid communication with the high pressure manifold (133). The HPV functions as a normally-closed pressuring-opening check valve which opens passively when the pressure within the working chamber exceeds the pressure within the high pressure manifold. The HPV may also function as a normally-closed solenoid opened check valve which the controller may selectively hold open via an HPV control signal (321, being some of the pump actuation and pump shaft signals 171) and once the HPV is opened, by pressure within the working chamber. The HPV may be openable under the control of the controller when there is pressure in the high pressure manifold but not in the working chamber, or may be partially openable.

In a normal mode of operation described in the prior art (for example, EP 0 361 927, EP 0 494 236, and EP 1 537 333), the controller selects the net rate of displacement of fluid to the high pressure manifold by the hydraulic pump by actively closing one or more of the LPVs typically near the point of maximum volume in the associated working chamber's cycle, closing the path to the low pressure manifold and thereby directing fluid out through the associated HPV on the subsequent contraction stroke. The controller selects the number and sequence of LPV closures to produce a flow or apply a torque to the shaft (322) to satisfy a selected net rate of displacement. As well as determining whether or not to close or hold open the LPVs on a cycle by cycle basis, the controller is operable to vary the precise phasing of the closure of the LPVs with respect to the varying working chamber volume and thereby to select the net rate of displacement of fluid from the low pressure manifold to the high pressure manifold.

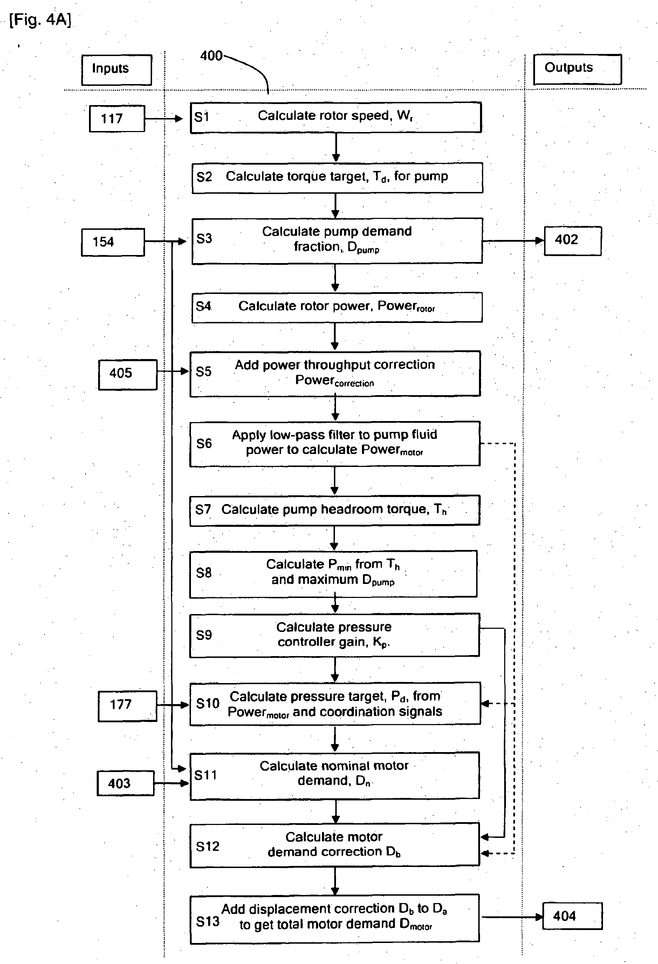

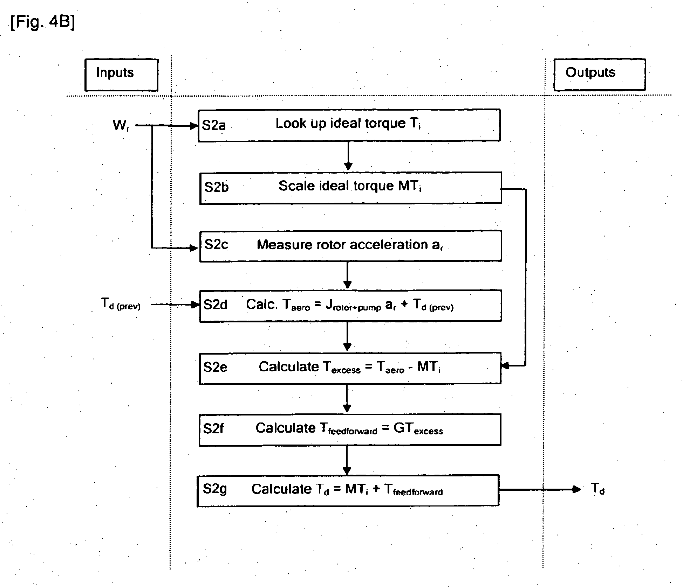

Figure 4 shows one time-step of the operation of a control algorithm (400) implementing the invention, and executed within the controller (112).

Referring first to Figure 4a, at step S1 the rotor speed Wᵣ is calculated from the rotor speed signal (117). Alternatively the rotational speed of the pump may be measured as the pump and rotor are directly connected by the rotor shaft. A torque target, T_{d}, is calculated at step S2 from the rotor speed.

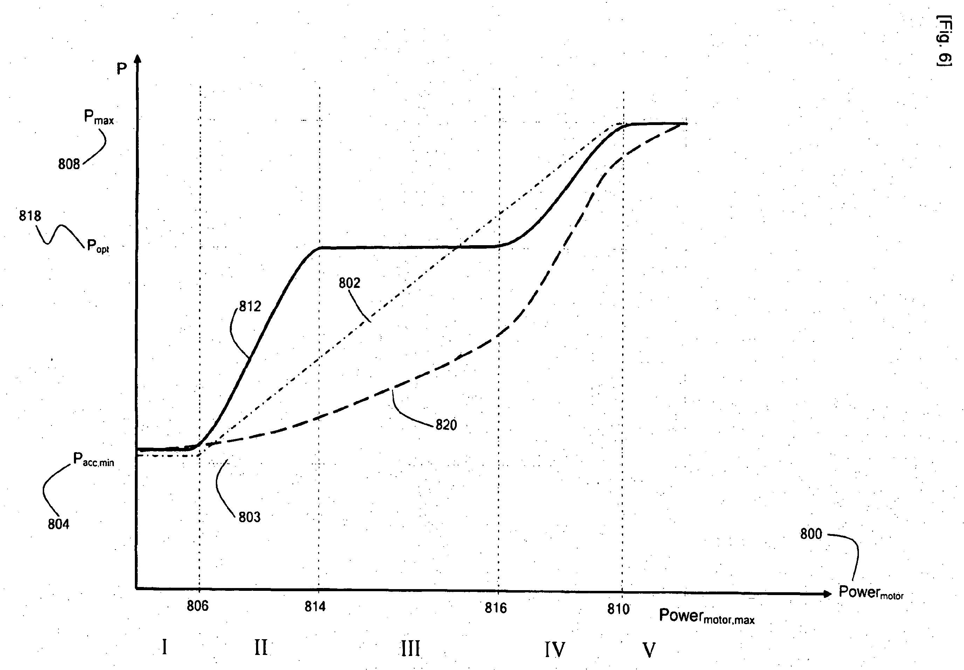

Referring now to Figure 4b, which shows step S2 in more detail, the aerodynamically ideal rotor torque Tᵢ is found in step S2a from a function of current rotor speed Wᵣ which is described in more detail with reference to Figure 6. In step S2b, Tᵢ is scaled by an ideal torque scale factor M which would typically be between 0.9 and 1 and may vary during use, according to wind conditions and blade aerodynamic changes over time, and may be communicated to the WTG by coordinating signals 177. M<1 causes the pump to produce a small amount less torque than ideal for the average wind speed, and thereby to run slightly faster than ideal for the average wind speed. The WTG is thus aerodynamically less optimal during lulls (than when M=1), but more optimal during gusts; since the available power is very much higher in gusts than in lulls, the WTG captures more energy overall, albeit with a more variable capture rate.

The algorithm also has the ability to adjust the torque applied to the rotor by the pump to cause the rotor to more closely follow rapid changes in wind speed and thereby extract maximum power from the wind even during gusts and lulls. In step S2c the rotor acceleration aᵣ is determined from the rate of change of the speed Wᵣ. In step S2d the aerodynamic torque Tₐₑᵣₒ (the actual amount of torque applied to the rotor by the wind at the present time) is discovered, being the sum of the torque applied to the rotor by the pump in the previous timestep T_{d(prev)} (known from the selected net rate of displacement rate of the pump and the measured pressure in the high pressure manifold) and the net torque that is accelerating the combined inertia of the rotor, pump and rotor shaft Jᵣₒₜₒᵣ₊ₚᵤₘₚ. In step S2e the algorithm computes the excess torque T excess over and above the pump torque, i.e. that torque which is expected to accelerate (if positive) or decelerate (if negative) the rotor, rotor shaft and pump. Step S2f comprises multiplying T_{excess} by G, a feedforward gain, to calculate T_{feedforward}. (A more complex feedforward function could be used, for example a lead or lag controller, to improve tracking of wind speed even further.) In step S2g, T_{feedforward} is added to the ideal torque for maximum power capture Tᵢ, to find the torque demand T_{d} that should be applied to the rotor by the pump to allow the rotor speed to track the wind speed accurately, while extracting maximum power when the rotor and wind speeds are matched by the optimum tip speed ratio.

Returning to Figure 4a, at step S3 T_{d} is divided by the measured pressure of the high pressure manifold (from the HP pressure signal, 154) to calculate a pump demand D ₚᵤₘₚ. The pump demand is the selected net rate of displacement of the pump and is an output (402) of the control algorithm, used by the controller to selectively operate the LPVs (and possibly HPVs) of the pump in the manner described above.

At step S4, the controller calculates the power in the fluctuating energy flow Power ᵣₒₜₒᵣ. This can be done in a number of different ways, for example: using the known rotation rate of the pump, the selected net rate of displacement of the pump, and the pressure in the high pressure manifold to calculate the hydraulic power output; or using the known rotation rate of the rotor and the estimated aerodynamic torque Tₐₑᵣₒ to calculate the mechanical power output.

The calculated power in the fluctuating energy flow is modified at step S5 by the addition of a power throughput correction, Power_{correction} (405), from the farm controller, communicated through coordination signals (177) as will be described later.

A smoothed version of the fluctuating energy flow, Powerₘₒₜₒᵣ, is calculated at step S6, by executing a smoothing module, for example a first order low pass filter, on the sum of Power_{correction} and Powerᵣₒₜₒᵣ. The designer may choose the smoothing algorithm to suit the WTG and the conditions. The smoothed version forms the basis of calculating the net rate of displacement of working fluid by the hydraulic motor, and is selected without regard to the effect of that rate on the pressure within the high pressure manifold, i.e. independently of it.

A headroom torque, Tₕ, is calculated at step S7. The headroom torque defines the minimum torque the pump must be able to apply to the rotor shaft at 'short notice' to properly control the rotor speed during unexpected gusts or wind increases. (The headroom torque is a function of the rotational speed of the pump and its properties will be described in detail later with reference to Figure 6.)

Rotor torque is the product of the pump selected net rate of displacement per revolution (which has a design limit fixed by the number of working chambers and their volume) and high pressure manifold pressure, so the torque headroom requirement provides a lower limit to Pₘᵢₙ. A minimum pressure of the high pressure manifold, Pₘᵢₙ, is calculated from Tₕ in step S8, and defines the lower limit of the acceptable pressure range. In addition the minimum precharge pressure P_{acc,min} of the smoothing (or first and second accumulators) provides an additional lower limit to Pₘᵢₙ below which there may be insufficient compliance in the high pressure manifold to achieve desirable operation. Pₘᵢₙ, and thus the acceptable pressure range, must be above both lower limits.

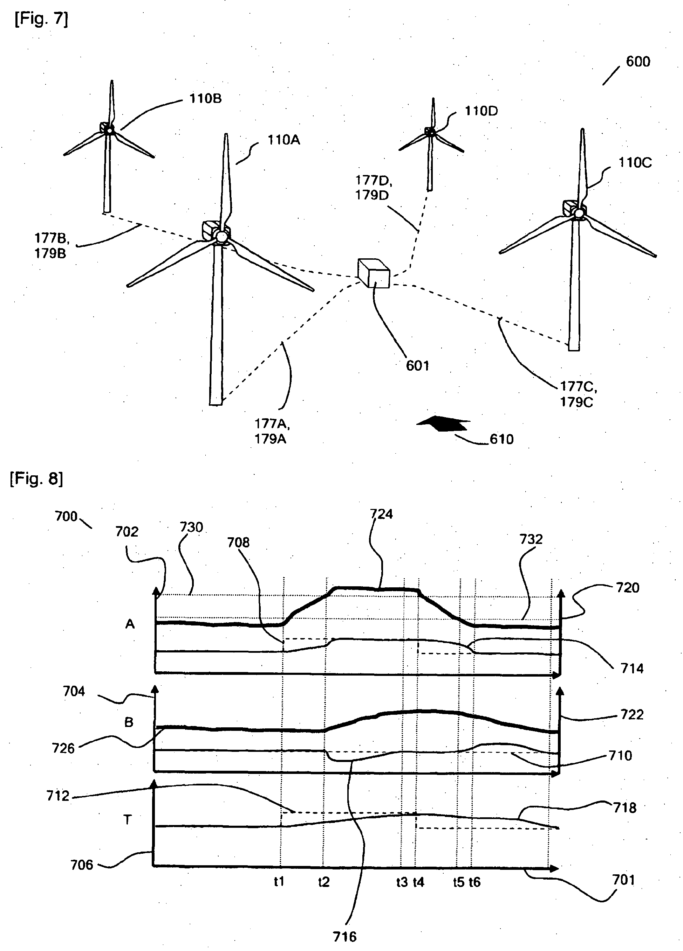

The minimum pressure of the high pressure manifold Pₘᵢₙ, the design maximum pressure of said manifold Pₘₐₓ (acting as an upper limit of the acceptable pressure range), and either the fluctuating energy flow or the smoothed version thereof, are used in step S9 to calculate a pressure controller gain, Kₚ, according to the function described with respect to Figure 7.

In step S10 an interim target pressure, Pi, is calculated from one or more of the optimum operating points of the WTG, the operating range limits of the WTG or a minimum pressure requirement, according to the function described with respect to Figure 8. A target pressure P_{d} is calculated by adjusting P₁ according to demand coordination signals (177) from the wind farm as will be described in more detail later.

The algorithm calculates a nominal value for the net rate of displacement of the motor (motor demand), Dₙ, at step S11. The nominal motor demand is calculated from the motor speed signal 211, the HP pressure signal (154) and Powerₘₒₜₒᵣ (Dₙ = Power ₘₒₜₒᵣ / Wₘₒₜₒᵣ / Pₛ).

At step S 12 the algorithm calculates a motor demand correction, D_{b}, by multiplying the difference between the measured pressure and the target pressure P_{d} by the pressure controller gain Kₚ.

The final step of the algorithm, S 13, calculates the net rate of displacement of the motor (motor demand), Dₘₒₜₒᵣ, by adding together the nominal motor demand Dₙ and the demand correction D_{b}. The motor demand is an output of the control algorithm (404), used by the controller to selectively operate the valves of the motor in the manner described above.

The algorithm is executed repeatedly in use.

An example of the operation of the invention in controlling the WTG of Figure 1, when the WTG is subjected to a wind gust, will now be described.

Before the WTG is affected by the gust, the rotor is spinning at near to the aerodynamic optimum speed. (If M is for example 0.97, the rotor spins a little faster than the aerodynamic optimum, so will already be running a little fast to thereby capture the impending and other gusts more efficiently.) The high pressure manifold pressure Pₛ is equal to the optimal desired pressure P_{d} (acting as the target pressure) determined with reference to the steady wind power and other conditions.

When the gust impinges on the WTG the rotor will accelerate due to the gust increasing the torque applied to the hub above the torque applied by the pump T_{d} at the previous timestep. The controller calculates this acceleration aᵣ of the rotor according to step S2c, and from that estimates the aerodynamic torque Tₐₑᵣₒ from the wind according to step S2d. Using steps S2e, S2f and S2g, the controller calculates the required pump torque T_{d}. If gain G is, for example around 0.3, then due to the subtraction of T_{feedforward} from MTᵢ, the pump demand T_{d} is reduced. Dₚᵤₘₚ falls (step S3), meaning less fluid is displaced by the pump and less torque is applied than in the absence of the gust. The rotor will thus accelerate faster than if G = 0, and thereby quickly match the tip speed to the wind speed (in the constant tip speed ratio range) to extract maximum power from the gust.

The controller calculates the fluctuating energy flow Powerᵣₒₜₒᵣ (step S4) from the ideal rotor torque MTᵢ (or the estimated aerodynamic torque Tₐₑᵣₒ) and current rotor speed and adds any additional information in the form of power throughput prediction Power_{correction} (step S5). Powerₘₒₜₒᵣ is calculated by filtering the result of the addition with the low pass filter as described earlier with reference to step S6. The low pass filter means that immediately after the gust affects the WTG, and in contrast to WTGs of the prior art, the motor power (and thus the generator's electrical output) is substantially the same as immediately before the gust, despite the increase in wind power and the decrease in pump output.

Because the transfer of fluid into the high pressure manifold has fallen, fluid is extracted from the first and second accumulators to help drive the motor. The high pressure manifold pressure Pₛ falls as fluid is extracted, and in subsequent timesteps D ₚᵤₘₚ will rise to maintain the desired pump torque demand T_{d} as Pₛ falls below the optimal pressure P_{d}. The smoothly changing pump torque demand increases the lifetime of the blades or allows them to be made more cheaply.

In a short time the rotor speed will have increased to match the wind speed. The pump demand T_{d} will now match the ideal torque MTᵢ and the pump will be extracting the full power of the gust. Because the low pass filter causes Powerₘₒₜₒᵣ to increase more slowly, excess fluid will be transferred by the pump and stored in the first and second accumulators, raising pressure Pₛ. Typically Pₛ will rise beyond the optimal pressure P_{d}. Pₛ is therefore substantially unregulated within this first pressure range.

When the gust ebbs, the reverse process happens. The controller detects rotor deceleration, increases the pump torque to slow the rotor to match the new wind speed, and in the process additional energy is stored in the accumulators and pressure Pₛ rises further. The controller's low pass filter causes Powerₘₒₜₒᵣ to decrease slowly after the gust ebbs, extracting fluid from the accumulators and returning pressure Pₛ towards the optimum pressure P_{d}. If there is any remaining discrepancy between Pₛ and P_{d}, the pressure controller 529 will adjust the motor demand Dₘₒₜₒᵣ up or down slightly to ensure their eventual convergence.

It may be that when the gust impinges on the WTG, the pressure Pₛ falls so far that it enters the lower second range adjacent to the lower limit of the acceptable pressure range at Pₘᵢₙ. In this case the pressure feedback controller gain Kₚ will rise and the pressure feedback controller 529 will provide a stronger correction D_{b} to reduce the motor demand Dₘₒₜₒᵣ and thereby avoid Pₛ reaching Pₘᵢₙ. The electrical output of the generator will decrease, but damage to the turbine is avoided.

It may also be that after the gust impinges on the WTG, or when the gust passes, the pressure Pₛ rises so far that it enters the upper second range near the upper limit of the acceptable pressure range at Pₘₐₓ. In this case the pressure feedback controller gain Kₚ will rise and the pressure feedback controller 529 will provide a stronger correction D_{b} to increase the motor demand Dₘₒₜₒᵣ and thereby avoid Pₛ reaching Pₘₐₓ. The electrical output of the generator will increase, but damage to the turbine is avoided.

The result is a much more smooth generation of electricity than the WTGs of the prior art. The accumulators enable the output power of the WTG to be a time-averaged version of the instantaneous input power to the blades.

The time constant of the low pass filter is related to the size of the hydraulic accumulators and the pump and the wind conditions at the site of the WTGs installation. The time constant is preferably chosen just long enough that the pressure does not extravagate the first range consequent to 90% of gusts or lulls, or for at least 95% of the operating time for example. The low pass filter behaviour may be adjusted in use according to changing wind conditions, acting as characteristics of the fluctuating energy flow. It is preferable that when the expected energy of a gust or lull increases (for example, at high wind speeds or when the wind is from a direction associated with gusty conditions), the low pass filter's action is reduced so that the hydraulic motor responds more quickly to the gust and the high pressure manifold pressure does not rise too high. The controller may employ algorithms to learn the optimum filter parameters that provide the smallest variations in generator power output while keeping the pressure within the first range. The controller may determine a set of optimum filter parameters that are just long enough that the pressure does not extravagate the first pressure range consequent to 90% of gusts or lulls, or for at least 95% of the operating time for example.

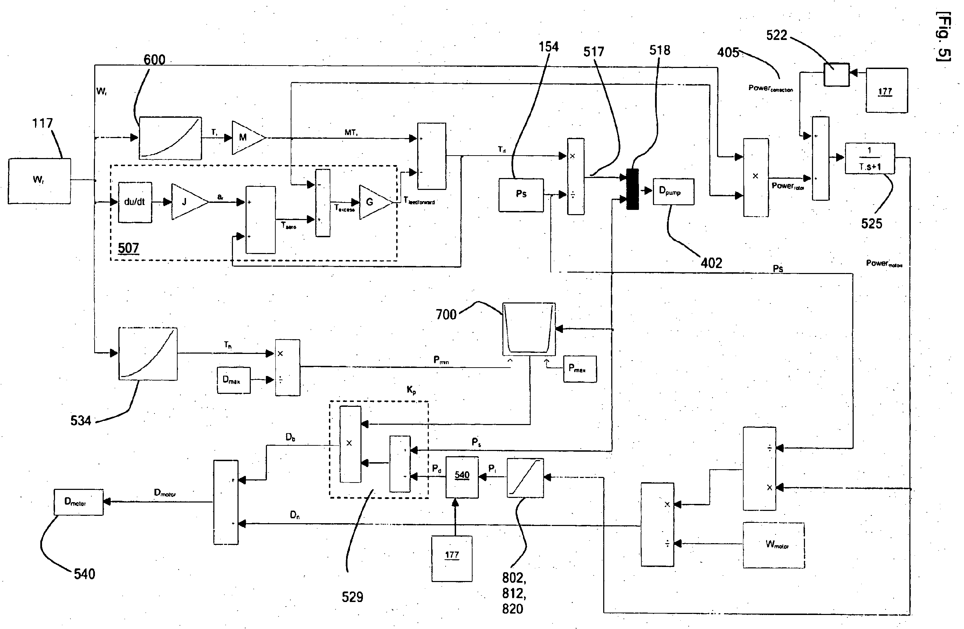

Figure 5 shows a schematic of the signal flows in the implementation of the invention, equivalent to the execution flow diagram in Figure 4. The rotor speed measurement (117) is used to calculate the ideal torque Tᵢ according to the function (600) defined with reference to Figure 6. The ideal torque is adjusted by multiplying by an ideal torque scale factor M to give an adjusted ideal torque (MTᵢ). The ideal torque scale factor M can be any number between zero and one, and would typically be between 0.9 and 1. A slight reduction in pump torque allows the rotor to accelerate more rapidly during gusts, thus capturing more power than if the pump torque were not scaled from the ideal torque function (600). The scale factor will cause the rotor to decelerate more slowly, thus operating off its optimum operating point during lulls, however the additional power available due to tracking gusts is more significant than power loss due to sub-optimal operation during lulls.

The torque target T_{d} is the difference between the adjusted ideal torque and the output of a torque feedback controller (507). The torque feedback controller calculates an estimated aerodynamic torque, Tₐₑᵣₒ, which is the sum of the current torque target and an acceleration torque which is derived from the angular acceleration of the rotor aᵣ multiplied by the moment of rotational inertia of the energy extraction device, J. The output of the torque feedback controller is the difference T_{excess} between the estimated aerodynamic torque and the adjusted ideal torque, which is then multiplied by a feedback gain, G to obtain a feedback torque T_{feedback}. The feedback gain can be any number greater than or equal to zero, with a value of zero acting to disable the torque feedback controller. The torque feedback controller (507) will respond to the acceleration and deceleration of the energy extraction device by subtracting torque from the adjusted ideal torque MTᵢ to slightly reduce the torque target T_{d} in the case of acceleration, and adding torque to the adjusted ideal torque to slightly increase the torque target T_{d} in the case of deceleration. This enables the rotor to accelerate and decelerate faster in response to changes in input energy than adjusted ideal torque control alone, hence allowing for greater total energy capture.

The pump demand estimate (517) is calculated by dividing the torque target by the measured pressure of the pressurised hydraulic fluid (Pₛ, 154). The pump demand estimate may be modified by a pressure limiter (518), which could be a PID type controller, the output of which is the pump demand output of the controller Dₚᵤₘₚ (402). The pressure limiter acts to keep the pressure within the acceptable range, i.e. below a maximum level for safe operation of the WTG, by modifying the pump demanded rate of fluid quanta transfer. The pressure limit may be disabled in some operating modes wherein it is desirable to dissipate energy through the high pressure relief valve (155), for instance to prevent the turbine from operating above its rated speed during extreme gusts, or may be varied in use.

From the product of rotor speed Wᵣ and adjusted ideal torque MTᵢ the controller calculates the fluctuating energy flow Powerᵣₒₜₒᵣ. (Alternatively this could be calculated from hydraulic information available to the controller: the rotation rate of the pump, the selected net rate of displacement of the pump, and the pressure in the high pressure manifold.) The fluctuating energy flow is added to a correction Power_{correction} from a power throughput adjuster (522), interpreting signals from the farm controller, communicated through coordination signals (177).

A smoothing module (525) in the form of a first order low pass filter smoothes Powerᵣₒₜₒᵣ to provide the motor throughput power Powerₘₒₜₒᵣ. Powerₘₒₜₒᵣ is divided by the measured hydraulic motor speed Wₘₒₜₒᵣ and pressure of the pressurised hydraulic fluid Pₛ to find the nominal motor demand Dₙ.

The motor throughput power informs a target pressure function (802, 812, 820) which provides a target pressure P_{d} for the pressure feedback controller (529), which in turn uses a proportional gain Kₚ to calculate a motor demand correction D_{b}. Kₚ is calculated based on where the current pressure Pₛ lies within the acceptable pressure range (defined by maximum pressure Pₘₐₓ of the high pressure manifold, and the minimum pressure Pₘᵢₙ) and within the first and second ranges, according to a gain schedule function (700) described in more detail with reference to Figure 7. The minimum pressure is calculated by dividing the headroom torque Tₕ, which is a function (534) of rotor speed, by the maximum pump demand Dₘₐₓ. The headroom torque function is described in more detail with reference to Figure 6. The output hydraulic motor demand Dₘₒₜₒᵣ (540) is the sum of the nominal motor demand Dₙ and the motor demand correction D_{b}.

The invention has been shown with a proportional controller for the pressure feedback controller (529) and a first order low pass filter for the smoothing module (525). It is also possible to make alternative embodiments. For example, the pressure feedback controller could be a proportional-integral controller (PI controller) with a low integral gain and the smoothing module and nominal motor demand Dₙ may be removed altogether. Whereas generally a proportional-integral controller is selected from a set of candidate controllers in order to enhance the tracking of an output to an input, surprisingly we have found that if the integral gain is low enough then the controller acts to smooth the fluctuating energy flow to create a smoothed motor demand correction D_{b} and thus the low pass filter is not required (the function of the smoothing module is carried out by the pressure feedback controller).

Figure 6 shows examples of the types of target pressure functions that could be implemented by the WTG. The target pressure functions define a target pressure (528) for the pressure feedback controller (529) that is a function of the fluctuating energy flow Powerᵣₒₜₒᵣ or the low-pass filtered version Powerₘₒₜₒᵣ (800), with the shape of the function being determined from a wide range of variables as will be explained.

The dot-dashed line (802) shows a first target pressure function wherein the target pressure is equal to or just larger than the constant minimum pressure P_{acc,min} (804) in a first region (I) spanning from zero power to a first power (806), is equal to the constant maximum pressure Pₘₐₓ (808) in a fifth region (V) spanning from a fourth power (810) to the maximum rated power Power_{motor,max}, and increases linearly with Powerₘₒₜₒᵣ between the first region and the fifth region.

The minimum precharge pressure P_{acc,min} is a lower limit to pressure below which there is insufficient compliance fluidically connected to the high pressure manifold, i.e. below the precharge pressure of the smoothing or first or second accumulators. The maximum pressure Pₘₐₓ is related to the maximum allowable operating pressure of the pressurised hydraulic fluid, considering component lifetimes and the setting of the high pressure relief valve (155). Thus the target pressure is responsive to characteristics of the fluctuating energy flow, the hydraulic pump and motor, and the accumulators.

The first target pressure function provides the benefit of ensuring that there is enough pressure for the pump to apply maximum torque to the rotor at high power conditions (i.e. in the fifth region V). The first target pressure function further provides the benefit of ensuring that in the first region (I) in which the kinetic energy in the rotor is low, the pressure is maintained low enough that the relative energy absorbed by individual working chamber activations of the pump is not sufficient to apply too much torque to the blades or other parts of the WTG, while still being above the minimum allowable pressure Pₘᵢₙ.

A second target pressure function is shown with a solid line (812). This function is similar to the first target pressure function in regions I and V, but further comprises a third region (III) spanning from a second power (814) to a third power (816) in which the target pressure is an optimum pressure Pₒₚₜ (818), and second (II) and fourth regions (IV) spanning from the first to the second powers and from the third to the fourth powers respectively, which provide for a smooth change in target pressure between the adjacent regions.

Optimum pressure Pₒₚₜ, is a pressure at which the pump and the motor (and all the other hydraulic components) together work at optimal hydraulic efficiency. Pₒₚₜ may be found by experiment, simulation or calculation, or any combination thereof. It may be that the pump and/or the motor are designed to be optimally efficient at Pₒₚₜ, which may be chosen by the designer. Thus the target pressure is responsive to characteristics of the fluctuating energy flow, the hydraulic pump and the hydraulic motor.

The second target pressure function provides the benefit of ensuring that the WTG transmission operates where possible at an optimal pressure and thus that its energy productivity is maximised.

A third target pressure function is shown with a dashed line (820). This function defines a target pressure that is closer to the minimum system pressure, rather than the maximum, over the majority of the operating power throughput levels of the WTG. The advantage of the third target pressure function is that the accumulators are generally at a low state of charge to maximise the storage available to accept energy from gusts of wind, and also to operate the WTG at high rates of fluid flow, rather than high pressure, which may be desirable to reduce vibration and or noise, or to increase the lifetime of the WTG.

Thus, the WTG may operate efficiently and adapt continuously to changing wind conditions. However, the as the WTG has an input which can be used to dynamically vary P_{d}, the function of the WTG can be modified to optimise power generation, or for another purpose. For example, in an example application, another WTG upwind of this one, or an upwind anemometer, provides wind speed data in the form of a forewarning of a gust or a lull in the wind. The WTG may temporarily and anticipatorily increase or decrease its power throughput according to a smoothing function, to provide a smoother power output than would be the case in the absence of the forewarning. In yet another example, the control centre provides the demand coordination signals to increase or decrease the WTGs power output temporarily to meet a transient need of the electricity network (101). The WTG communicates the pressure of the high pressure manifold (133) or the accumulators (147,149) to the control centre to aid the control centre to coordinate any number of WTGs operated according to the invention. This advantageous feature provides for a more predictable power output and the ability to provide or not provide extra energy to the electricity network on demand, and thereby to obtain a higher price for the energy than would otherwise be the case.

Thus, the farm controller uses the coordination signals (177) to communicate increases or decreases in electrical output to WTGs within the same farm, which will adjust their output to provide a constant electrical output from the farm. The coordination signals may comprise signals indicative that an individual WTG should have a specific target pressure, P_{d}, or that is should increase or decrease high pressure manifold pressure. As these pressures are a monotonic function of the amount of working fluid stored in the high pressure accumulators, these signals also can also indirectly control the state of charge of the WTG accumulators. Indeed, in some embodiments, the coordination signals could comprise signals indicative of a target state of charge or target pressure. The coordination signals may be instructions to vary the net rate of displacement of the hydraulic pump or the net rate of displacement of the hydraulic motor, or the difference between the net rate of displacement of the hydraulic pump and the hydraulic motor. The coordination signals may comprise instructions to shut down or switch off a generator, or to enter or leave an operating mode. One skilled in the art will appreciate that many different types of coordination signal could be employed.

Figure 7 shows a wind farm comprising four WTGs 110A through 110D (hereinafter simply "A" through "D". The WTGs communicate monitoring signals 177A through 177D and receive coordinating signals 179A through 179D respectively to and from a farm controller 601, which is typically a microcontroller executing a stored program in use. The function of the farm controller may be carried out within one of the WTGs, or remote to them all as shown in this Figure. The wind impinges on the farm from a wind direction 610, such that (in the following examples) WTG 110A experiences changes in wind strength (or direction) some time before WTG 110B, which is downwind of it. Likewise WTG 110C experiences changes in wind strength (or direction) some time before WTG 110D.

Figure 8 shows a time series 700 of the operation of WTGs A and B when a gust impinges on A (but before it reaches B). Horizontal axis 701 shows time. Axes 702, 704 and 706 respectively graph power for A, B and the sum (T) of A and B - the input power from the wind (or rotor(s)) is shown as dashed lines 708, 710 and 712, and the output power of the hydraulic motor(s) to the generator(s) is shown as thin solid lines 714, 716 and 718. Axes 720 and 722 respectively show the high pressure manifold pressure Pₛ for A and B, using thick solid lines 724 and 726.

Before time t1, A and B are in a more or less steady state condition with more or less constant wind conditions. Their pressures have converged to their respective targets calculated by each WTGs controller in the manner described previously herein. At t1 a gust of wind impinges on A, raising the input power 708. A's output power slowly builds between t1 and t2, while B's does not change. At t2, A uses monitoring signals 177A to communicate to the farm controller 601 that high pressure manifold pressure 724 has reached a fixed or variable threshold pressure 730, which is close to the maximum pressure allowable. The farm controller uses coordinating signals 179B to issue coordinating instructions to reduce the output power of B, concomitantly with issuing further coordinating instructions via coordinating signals 179A to increase the output power of A (or to authorise A to increase it's output power). Thus, after t2, while the power output of A 714 increases rapidly so that the pressure 724 stabilises near the maximum, total power output 718 increases smoothly while pressure 726 of turbine B increases. At t3 the output power of the two turbines matches their respective input powers, the pressures of both are stable, and the output power of the farm as a whole 718 has increased. At t4 the gust dies away: the output power 714 of A now exceeds its input power and its pressure 724 falls, and the total output power 718 also falls. At t5, A communicates to the farm controller that its pressure is below a second fixed or variable threshold, and the farm controller communicates to B that it may increase its output to exceed its input power, thereby to return its pressure 726 to substantially the same pressure target as before the gust arrived.

In an alternative embodiment, at t2 A may use monitoring signals 177A to communicate to the farm controller 601 that it's output power is rising by an amount in excess of an allowable rate (due to a need to regulate the pressure within the high pressure manifold to stay within the first range), and the farm controller may use coordinating signals 179B to reduce the output power of B by the same excess amount.

In an alternative embodiment, the farm controller 601 may control the relative power of the pumps and motors of all the WTGs, smoothing the sum of the output powers of all the WTGs. As individual WTGs may receive different amounts of energy, this will require individual WTGs to generate different amounts of power (by varying the rate of displacement of the hydraulic motor), or to temporarily increase or decrease the amount of energy which they store as required. In some circumstances, a subset of the WTGs may be instructed to reduce or increase their power output relative to other WTGs for a period of time. For example, if a large gust of wind is predicted (for example, general wind conditions are gusty, or a sensor detects an impending gust), the state of charge and high pressure manifold pressure of the some or all of the WTGs may be reduced below their normal states in advance of the gust so that the WTGs have capacity to absorb as much energy as possible. Then, when the gust impinges on those turbines, they may maintain, or only slightly increase, their output while absorbing some or all of the gust into the accumulators. It is possible that before the gust, only the upwind turbines have their state of charge reduced, and that after the gust impinges on them, other turbines have their state of charge reduced.

The electrical generators within a WTG typically consume a significant amount of power due to so-called "winding and windage losses". The power loss includes a significant component which is substantially independent of the amount of power generated and which can lead to high inefficiencies. However, this power loss can be reduced by periodically stopping individual generators. This is practical in WTGs with fluid accumulators as working fluid displaced by the hydraulic pump can be stored in a fluid accumulator while the displacement of the hydraulic motor which drives the generator is reduced to zero. Similarly, an electrical generator might be driven by a hydraulic motor at the rate which provides most efficient energy generation (often the rate at which the generator is driven at is maximum rated power output), to minimise energy loss as a proportion of energy delivered to the grid. Thus, it can be most efficient for an electrical generator to be switched between off and a fixed power output. If a WTG has multiple electrical generators, some may be switched off at any given time. However, although this is energy efficient it presents a practical problem as the resulting power output is stepped, whereas electricity grids typically require smooth power input. In some embodiments, the farm controller coordinates the starting and stopping of electrical generators within each individual WTG in order to smooth the combined power output of a group of WTGs to an electricity grid. In order to facilitate this, the coordination signals may include instructions to switch a generator on or off.

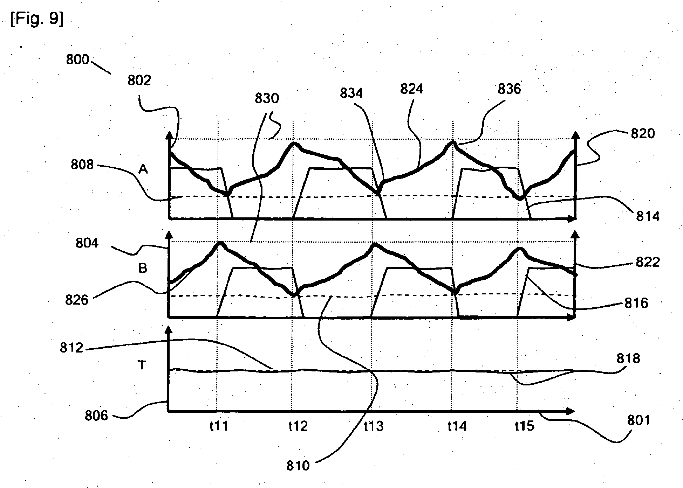

Figure 9 shows a time series 800 of the operation of WTGs A and B when there is a low wind condition where the friction and electrical losses in the generator and hydraulic motor are relatively high compared to the available energy from the wind. In this condition it is desired to operate the WTGs in a so-called start/stop mode, in which the rotors of each turbine turn continuously with a substantially constant speed matched to the wind conditions, but the hydraulic motor and generator is stopped periodically. Horizontal axis 801 shows time. Axes 802, 804 and 806 respectively graph power for A, B and the sum (T) of A and B - the input power from the wind (or rotor(s)) is shown as dashed lines 808, 810 and 812, and the output power of the hydraulic motor(s) to the generator(s) is shown as thin solid lines 814, 816 and 818. Axes 820 and 822 respectively show the high pressure manifold pressure PS for A and B, using thick solid lines 824 and 826.

Before time t11 the generator of A is on and driven by its hydraulic motor connected to the electricity grid via contactor 161, while the generator of B is off and stationary (achieved by holding its high pressure valves closed, opening the contactor 161, removing the field current and optionally holding its low pressure valves open). The generator of A is driven at a much higher output rate 824 than the incoming energy 808 from the wind, causing a decline in its high pressure manifold pressure P_{S} (824) as fluid flows from the accumulators 147,149 into the hydraulic motor. Conversely, the pressure 826 in turbine B increases as fluid flows from its hydraulic pump into its accumulators.

At time t11, B uses the monitoring signal 177B to communicate to the farm controller that it's accumulators are shortly to reach the upper pressure threshold 830. The farm controller uses coordinating signal 177B to cause the turbine controller 112 to operate the high and low pressure valves of the hydraulic motor of B to rotate the generator, and a short time later the contactor 161 to close under the control of generator and contactor controller 163 when electricity supply sensors 168 and generator output sensors 170 indicate that the generator and grid are sufficiently in phase and at substantially the same voltage. Simultaneously, the farm controller uses coordinating signal 177A to cause the turbine controller 112 to cease operating the high and low pressure valves of the hydraulic motor of A, at the same time as causing its contactor 161 to open. The pressure in A now climbs as the rotor and pump continue to transfer fluid from the low pressure to the high pressure manifold while regulating the rotor torque as previously described. The pressure in turbine B falls due to the greater rate of transfer of fluid from the high pressure manifold to the low pressure manifold, i.e. the greater output power commanded by the farm controller than the input power from the wind. The pressure rise or fall may be non-steady due to a non-steady wind input power, or even a non-steady output power request.

At t12, A uses the monitoring signal 177A to communicate to the farm controller that it's high pressure manifold is shortly to reach the upper pressure threshold 830. The farm controller uses coordinating signal 177A to ramp up the hydraulic motor of A and produce a high output rate, which causes the associated generator to spin and a short time later the contactor 161 to close. Simultaneously, the farm controller uses coor-dinating signal 177B to ramp down the hydraulic motor of B, opening its contactor and stopping the generator. The pressure in B now climbs while the pressure in turbine A falls.

This cycle can repeat indefinitely. Turbines may also communicate to the farm controller that they are about to reach a lower pressure threshold, and thus may initiate a change of state from generating to not generating.

With knowledge of the rate of power absorption and high pressure manifold pressure of each turbine 808,810 from monitoring signals 177A-D, and knowledge of the turbine characteristics, the farm controller may advantageously use the coordinating signals 179A-D to regulate the output rates 815,816 of each turbine, and the length of each on period and each off period of said turbines, to achieve the smooth and uninterrupted transfer of output power from one turbine to the next. Because the hydraulic motors and generators spend less time rotating at low power (which is inefficient), the amount of electricity generated by the farm 600 is higher than if they were spinning continuously, while the output power is more consistent than if each turbine were to independently schedule and regulate its output power. These advantages may be achieved with any number of turbines. It is possible that a plurality of turbines may be commanded to run their hydraulic motors simultaneously.

In a particularly advantageous embodiment, after opening the contactor 161 the hydraulic motors are switched to pumping operation when stopping the generators to capture the kinetic energy of the generators in the accumulators, causing rapid pressure rises 834 at the beginning of every off period. Hydraulic motors according to EP0494236 or EP 1 537 333 are operable to carry out motoring or pumping cycles simply by appropriate selection of valve timing. The energy so captured can be used in the subsequent generator restart to accelerate the generator and hydraulic motor very rapidly, causing rapid pressure decreases 836 at the beginning of every on period. Further, the ability of the hydraulic motors to start the generators with very little delay means that, even in variable wind conditions, the maximum range of pressures can be used with low risk of overpressure or underpressure. This then allows fewer starts and stops, reducing wear and tear on the electrical components and increasing efficiency even further. Surprisingly, recovering generator kinetic energy contributes to around a 10% energy output increase at low wind speeds, compared to letting the generators come naturally to a halt due to friction.

In some embodiments, the farm controller 601 may change the particular target pressure function, or target pressure itself, that is in use via the coordination signal (177), responsive to a manual input, meteorological data, or the monitoring signals 177A-D of one or more turbines. For example, if the wind speed is steady, the farm controller selects the second target pressure function (812) of Figure 6 on all the WTGs so that the target pressure is typically optimised for hydraulic efficiency. When the wind is gusty the controller selects the third target pressure function (820) on a first group of WTGs (perhaps comprising one WTG or several), but retains the second target pressure function (812) on a second group of WTGs not including those in the first group so that they may operate with optimum hydraulic efficiency. With the third target pressure thus selected, the accumulators of the WTGs of the first group absorb the energy of the gusts that impinge on them without raising their output much. Furthermore, when gusts impinge on the second group (their higher quiescent pressure causing them to increase their power output to regulate their high pressure manifold pressure to stay within the first range), the farm controller can use the coordinating signals 179 to have one or more of the first group of WTGs lower their output power to maintain a substantially constant farm output power. The lower quiescent pressure of the first group allows them to maintain their input power absorption rate even while the output power is lowered.

The turbine or farm controllers may of course blend any of the target pressure functions together to create an infinite number of variations, optimised for any conditions and location.

It is possible, where each WTG has a plurality of hydraulic motors perhaps driving a plurality of generators, that the farm controller 601 may, in periods of wind speed in which one or more, but not all, of the generators in each WTG have sufficient combined capacity to produce the full mean electrical output of the WTG in the current wind conditions, use the coordination signals 177A-D to start fewer than all of the hydraulic motors and generators, thereby leaving some unused hydraulic motors and/or generators. It is further possible that the farm controller 601 may use the coordination signals 177A-D to start the unused hydraulic motors and/or generators, or to control the field of said generators, to cause the generators to provide power factor correction or 'primary reserve' (i.e. standby power) to the electricity grid. Preferably the unused hydraulic motors are operated in an idle mode in which there is no, or substantially no, net displacement of fluid between the high and low pressure manifolds. It may be that the idle mode comprises a cavitation idle mode in which all of the low pressure and the high pressure valves are held closed during at least an entire cycle of working chamber volume, to isolate the working chamber from both high and low pressure manifolds and thereby create a vacuum (or partial vacuum) inside the working chamber in each cycle of working chamber volume. Such a mode is described in WO/2007/088380.

## Claims

1. An energy extraction device for extracting energy from an energy flow from a renewable energy source, the device comprising a controller (112) and a hydraulic circuit,
the hydraulic circuit comprising:
at least one hydraulic pump (129) driven by a rotating shaft (125), the rotating shaft driven by a renewable energy source,
at least one hydraulic motor (131) driving a load,
a low pressure manifold (135) to route working fluid from the at least one hydraulic motor to the at least one hydraulic pump, and
a high pressure manifold (133) to route fluid from the at least one hydraulic pump to the at least one hydraulic motor;
wherein the or each hydraulic pump and the or each hydraulic motor each comprise a plurality of working chambers (202) of cyclically varying volume and a plurality of valves for regulating the net displacement of working fluid between each working chamber and the high and low pressure manifolds, at least one valve associated with each working chamber being an electronically controlled valve (214, 220), said electronically controlled valves being operable by the controller to select the volume of working fluid displaced by each said working chamber on each cycle of working chamber volume and thereby regulate the net rate of displacement of working fluid by the at least one hydraulic pump and the at least one hydraulic motor,
the device further comprising at least one working fluid receptacle (147) which is in communication with the high pressure manifold, and **characterised by** comprising an input interface for receiving a control signal from a device coordinator (601) of an energy extraction installation comprising a plurality of said energy extraction devices,
an output interface for sending a state of charge signal related to a volume of hydraulic fluid in the working fluid receptacle, the input interface and the output interfaces of said energy extraction devices being In communication with the device coordinator to provide information to the device coordinator, to enable the energy extraction devices to be controlled in concert, and
wherein the controller is operable to select the rate of displacement of working fluid by the at least one hydraulic pump and the at least one hydraulic motor such that the relative rate of displacement of working fluid by the at least one hydraulic pump and the at least one hydraulic motor is responsive to the received control signal through the input interface.

2. An energy extraction device according to claim 1, wherein the control signals received by the input interface comprise either or both instructions to change one or more operating modes of the controller (112), and parameters taken into account by controller.

3. An energy extraction device according to claim 1, wherein the at least one working fluid receptacle (147) comprises at least one pressurisable container suitable for storing pressurised hydraulic fluid in which the pressure of the hydraulic fluid increases with increasing storage of hydraulic fluid by the pressurisable container.

4. An energy extraction device according to claim 1, wherein the state of charge signal related to the volume of hydraulic fluid within the at least one working fluid receptacle (147) is a measurement of a parameter which varies with the volume of hydraulic fluid within the at least one working fluid receptacle.

5. An energy extraction device according to claim 1, wherein the state of charge signal is representative, of one or more of the pressure in the high pressure manifold (133), the pressure in at least one said working fluid receptacle (147), the amount of working fluid stored in the at least one working fluid receptacle, and the amount of unfilled capacity of the at least one working fluid receptacle.

6. An energy extraction device according to claim 1, further comprising an output interface through which a power absorption signal, related to the power being received by the energy extraction device through one or more of the at least one hydraulic pump (129), is output in use.

7. An energy extraction device according to claim 6, wherein the p ower absorption signal in communication with the input and output interface is a signal representative of the angular velocity of the turbine blades, wind speed or water flow rate, blade pitch, torque in the rotating shaft, or fluid displacement by the pump (129).

8. An energy extraction device according to claim 1, wherein the energy extraction device has a first operating mode in which the at least one hydraulic motor (131) is operated alternatively in a first, dormant state and a second, active state, and a second operating mode in which the controller (112) determines the relative rate of displacement of working fluid by the at least one hydraulic pump and the at least one hydraulic motor (131) by varying the rate of displacement of working fluid by the at least one hydraulic pump, and which operates by default in the first operating mode, but operates in the second operating mode responsive to determining that the at least one working fluid receptacle (147) is near capacity

9. An energy extraction device according to claim 8, wherein the hydraulic liquid receptacle is near capacity (147) when the pressure in the high pressure manifold (133) exceeds a threshold.

10. An energy extraction device according to claim. 1, wherein the controller determines the relative rate of displacement of working fluid by the at least one hydraulic pump (129) and the at least one hydraulic motor (131) so that the pressure in the high pressure manifold tends towards a target pressure, whereupon; in at least one operating mode, the target pressure is determined by a received control signal.

11. An energy extraction device according to claim 1, wherein the energy extraction device is a wind turbine generator.

12. An installation comprising a plurality of said energy extraction devices according to claim 1 and a device coordinator (601), wherein the device coordinator in communication with the plurality of energy extraction devices and operable to transmit said control signals to individual groups of one or more said energy extraction devices.

13. An installation according to claim 12, wherein the inputs interfaces and output interfaces of the plurality of energy extraction devices are in communication with the device coordinator (601) to provide information to the device coordinator and receive control signals from the device coordinator, to enable a plurality of energy extraction devices within an installation to be controlled in concert, to optimise one or more parameters of the installation as a whole.

14. An installation according to claim 12, wherein the device coordinator, is configured to generate a smoother power output, or to hold a predetermined amount of energy in reserve in order to be able to temporarily supply additional power to an electricity grid on demand, or to optimise power extraction of the energy extraction devices as a whole given additional constraints.

15. An installation according to claim 12, wherein the said high pressure manifold of each of the plurality of energy extraction devices is in communication with at least one respective working fluide receptacle (147) and the device coordinator (601) is operable, in at least some circumstances, to transmit different control signals to a first and a second group of one or more said energy extraction devices to cause the first group to fill their respective working fluid receptacles to a greater proportion of their maximum capacity than the second group, while both groups of energy extraction devices extract energy from the renewable energy source.

16. An installation according to claim 15, wherein the device coordinator (601) is operable to predict a temporary change in the amount of energy from the energy flow which will be received by a group of one or more energy extraction devices and to change the control signals to the respective group of one or more energy extraction devices such as to cause the group of one or more energy extraction devices to reduce the amount of working fluid stored in their respective working fluid receptacles (147) in advance of the predicted temporary change in the amount of energy to be received.

17. A method of controlling an energy extraction device for extracting energy from an energy flow from a renewable energy source, the device comprising a controller (112) and a hydraulic circuit the hydraulic circuit comprising:
at least one hydraulic pump (129) driven by a rotating shaft (125), the rotating shaft driven by a renewable energy source,
at least one hydraulic motor (131) driving a load,
a low pressure manifold (135) to route working fluid from the at least one hydraulic motor to the at least one hydraulic pump,
and a high pressure manifold (133) to route fluid from the hydraulic pump to the hydraulic motor,
wherein the hydraulic pump and hydraulic motor each comprise a plurality of working chambers (202) of cyclically varying volume and a plurality of valves for regulating the net displacement of working fluid between each working chamber and the high and low pressure manifolds, at least one valve associated with each working chamber being an electronically controlled valve (214, 220), said electronically controlled valves being operable by the controller to select the volume of working fluid displaced by each said working chamber on each cycle of working chamber volume and thereby regulate the net rate of displacement of working fluid by the at least one hydraulic pump and the at least one hydraulic motor,
the device further comprising at least one working fluid receptacle (147) which is in communication with the high pressure manifold,
an input interface for receiving a control signal from a device coordinator (601) of an energy extraction installation comprising a plurality of said energy extraction devices,
an output Interface for sending a state of charge signal related to a volume of hydraulic fluid in the working fluid receptacle, the Input interfaces and the output interfaces of said energy extraction devices being in communication with the device coordinator to provide information to the device coordinator, to enable the energy extraction devices to be controlled in concert,
the method **characterised by** receiving a control signal and selecting the relative rate of displacement of working fluid by the at least one-hydraulic pump and the at least one hydraulic motor responsive to the received control signal.

18. A method of controlling an energy extraction device according to claim 17, wherein, at least in an operating mode, the relative rate of displacement of working fluid by the at least one hydraulic pump (129) and the at least one hydraulic motor (131) is determined by varying the rate of displacement of working fluid by the at least one hydraulic motor independently of varying the rate of displacement of working fluid by the at least one hydraulic pump.

## Patentansprüche

1. Energiegewinnungsvorrichtung zum Gewinnen von Energie aus einem Energiefluss von einer erneuerbaren Energiequelle, wobei die Vorrichtung eine Steuerung (112) und einen Hydraulikkreis aufweist,
wobei der Hydraulikkreis aufweist:
mindestens eine Hydraulikpumpe (129), die durch eine rotierende Welle (125) angetrieben wird, wobei die rotierende Welle durch eine erneuerbare Energiequelle angetrieben wird,
mindestens einen Hydraulikmotor (131), der eine Last antreibt,
einen Niederdruckverteiler (135) zum Leiten von Arbeitsflüssigkeit von dem mindestens einen Hydraulikmotor zu der mindestens einen Hydraulikpumpe, und
einen Hochdruckverteiler (133) zum Leiten von Flüssigkeit von der mindestens einen Hydraulikpumpe zu dem mindestens einen Hydraulikmotor;
wobei die oder jede Hydraulikpumpe und der oder jeder Hydraulikmotor jeweils mehrere Arbeitskammern (202) von zyklisch variierendem Volumen und mehrere Ventile zum Regulieren der Nettoverdrängung der Arbeitsflüssigkeit zwischen jeder Arbeitskammer und den Hoch- und Niederdruckverteilern aufweisen und mindestens ein mit jeder Arbeitskammer verbundenes Ventil ein elektronisch gesteuertes Ventil (214, 220) ist, wobei die elektronisch gesteuerten Ventile durch die Steuerung betrieben werden können, um das Volumen der Arbeitsflüssigkeit auszuwählen, das von jeder Arbeitskammer bei jedem Arbeitszyklus des Volumens der Arbeitskammer verdrängt wird, und dadurch die Nettoverdrängungsrate der Arbeitsflüssigkeit durch die mindestens eine Hydraulikpumpe und den mindestens einen Hydraulikmotor zu regulieren;
wobei die Vorrichtung ferner mindestens einen Arbeitsflüssigkeitsaufnahmebehälter (147) aufweist, der in Verbindung mit dem Hochdruckverteiler steht und **dadurch gekennzeichnet ist, dass** er eine Eingangsschnittstelle aufweist, um ein Steuersignal von einem Vorrichtungskoordinator (601) einer Energiegewinnungsinstallation zu empfangen, die mehrere der Energiegewinnungsvorrichtungen aufweist,
eine Ausgangsschnittstelle zum Senden eines Füllmengenzustandssignals, das mit einem Volumen der Hydraulikflüssigkeit in dem Arbeitsflüssigkeitsaufnahmebehälter in Zusammenhang steht, wobei die Eingangsschnittstellen und die Ausgangsschnittstellen der Energiegewinnungsvorrichtungen in Verbindung mit dem Vorrichtungskoordinator stehen, um dem Vorrichtungskoordinator Informationen bereitzustellen und zu ermöglichen, dass die Energiegewinnungsvorrichtungen gemeinsam gesteuert werden können, und
wobei die Steuerung betriebsfähig ist, die Verdrängungsrate der Arbeitsflüssigkeit durch die mindestens eine Hydraulikpumpe und den mindestens einen Hydraulikmotor auszuwählen, sodass die relative Verdrängungsrate der Arbeitsflüssigkeit durch die mindestens eine Hydraulikpumpe und den mindestens einen Hydraulikmotor auf das empfangene Steuersignal durch die Eingangsschnittstelle anspricht.

2. Energiegewinnungsvorrichtung nach Anspruch 1, wobei die durch die Eingangsschnittstelle empfangenen Steuersignale Befehle aufweisen, um eine oder mehrere Betriebsarten der Steuerung (112) zu ändern, oder Parameter, die von der Steuerung berücksichtigt werden, oder beides.

3. Energiegewinnungsvorrichtung nach Anspruch 1, wobei der mindestens eine Arbeitsflüssigkeitsaufnahmebehälter (147) mindestens einen druckbeaufschlagbaren Behälter aufweist, der zum Speichern von druckbeaufschlagter Hydraulikflüssigkeit geeignet ist, in dem der Druck der Hydraulikflüssigkeit mit zunehmendem Speichern von Hydraulikflüssigkeit durch den druckbeaufschlagbaren Behälter zunimmt.

4. Energiegewinnungsvorrichtung nach Anspruch 1, wobei das Füllmengenzustandssignal, das mit dem Volumen der Hydraulikflüssigkeit innerhalb des mindestens einen Arbeitsflüssigkeitsaufnahmebehälters (147) verbunden ist, eine Messung eines Parameters ist, der mit dem Volumen der Hydraulikflüssigkeit innerhalb des mindestens einen Arbeitsflüssigkeitsaufnahmebehälters variiert.

5. Energiegewinnungsvorrichtung nach Anspruch 1, wobei das Füllmengenzustandssignal für ein oder mehr von dem Druck im Hochdruckverteiler (133), dem Druck in mindestens einem der Arbeitsflüssigkeitsaufnahmebehälter (147), der Menge an Arbeitsflüssigkeit, die in dem mindestens einen Arbeitsflüssigkeitsaufnahmebehälter gespeichert ist, und dem Betrag an ungefüllter Kapazität des mindestens einen Arbeitsflüssigkeitsaufnahmebehälters repräsentativ ist.

6. Energiegewinnungsvorrichtung nach Anspruch 1, ferner aufweisend eine Ausgangsschnittstelle, durch die ein Leistungsaufnahmesignal, das mit der Leistung in Zusammenhang steht, die von der Energiegewinnungsvorrichtung durch eine oder mehrere der mindestens einen Hydraulikpumpe (129) aufgenommen wird, beim Gebrauch ausgegeben wird.

7. Energiegewinnungsvorrichtung nach Anspruch 6, wobei das Leistungsaufnahmesignal in Verbindung mit der Eingangs- und Ausgangsschnittstelle ein Signal ist, das für die Winkelgeschwindigkeit der Turbinenschaufeln, die Windgeschwindigkeit oder den Wasserdurchsatz, die Schaufelteilung, das Drehmoment in der rotierenden Welle oder die Flüssigkeitsverdrängung durch die Pumpe (129) repräsentativ ist.

8. Energiegewinnungsvorrichtung nach Anspruch 1, wobei die Energiegewinnungsvorrichtung eine erste Betriebsart aufweist, bei der der mindestens eine Hydraulikmotor (131) alternativ in einem ersten inaktiven Zustand und einem zweiten aktiven Zustand betrieben wird, und eine zweite Betriebsart, bei der die Steuerung (112) die relative Verdrängungsrate der Arbeitsflüssigkeit durch die mindestens eine Hydraulikpumpe und den mindestens einen Hydraulikmotor (131) durch Variieren der Verdrängungsrate der Arbeitsflüssigkeit durch die mindestens eine Hydraulikpumpe bestimmt, und standardmäßig in der ersten Betriebsart arbeitet, aber ansprechend auf das Bestimmen, dass der mindestens eine Arbeitsflüssigkeitsaufnahmebehälter (147) nahe an seiner Kapazität ist, in der zweiten Betriebsart arbeitet.

9. Energiegewinnungsvorrichtung nach Anspruch 8, wobei der Hydraulikflüssigkeitsaufnahmebehälter nahe an seiner Kapazität (147) ist, wenn der Druck im Hochdruckverteiler (133) einen Schwellenwert überschreitet.

10. Energiegewinnungsvorrichtung nach Anspruch 1, wobei die Steuerung die relative Verdrängungsrate der Arbeitsflüssigkeit durch die mindestens eine Hydraulikpumpe (129) und den mindestens einen Hydraulikmotor (131) bestimmt, sodass der Druck in dem Hochdruckverteiler in Richtung eines Solldrucks tendiert, woraufhin in mindestens einer Betriebsart der Solldruck durch ein empfangenes Steuersignal bestimmt wird.

11. Energiegewinnungsvorrichtung nach Anspruch 1, wobei die Energiegewinnungsvorrichtung eine Windenergieanlage ist.

12. Installation, die mehrere Energiegewinnungsvorrichtungen nach Anspruch 1 und einen Vorrichtungskoordinator (601) aufweist, wobei der Vorrichtungskoordinator in Verbindung mit den mehreren Energiegewinnungsvorrichtungen steht und betriebsfähig ist, die Steuersignale zu individuellen Gruppen von einer oder mehreren Energiegewinnungsvorrichtungen zu senden.

13. Installation nach Anspruch 12, wobei die Eingangsschnittstellen und Ausgangsschnittstellen der mehreren Energiegewinnungsvorrichtungen in Verbindung mit dem Vorrichtungskoordinator (601) stehen, um Informationen an den Vorrichtungskoordinator bereitzustellen und Steuersignale von dem Vorrichtungskoordinator zu empfangen und zu ermöglichen, dass mehrere Energiegewinnungsvorrichtungen innerhalb einer Installation gemeinsam gesteuert werden können, um einen oder mehrere Parameter der Installation als Ganzes zu optimieren.

14. Installation nach Anspruch 12, wobei der Vorrichtungskoordinator konfiguriert ist, eine glattere Leistungsausgabe zu erzeugen oder eine vorbestimmte Energiemenge in Reserve zu halten, um in der Lage zu sein, auf Anforderung vorübergehend zusätzliche Leistung an ein Elektrizitätsnetz bereitzustellen oder die Leistungsgewinnung der Energiegewinnungsvorrichtungen bei gegebenen zusätzlichen Auflagen als Ganzes zu optimieren.

15. Installation nach Anspruch 12, wobei der Hochdruckverteiler von jeder der mehreren Energiegewinnungsvorrichtungen in Verbindung mit mindestens einem entsprechenden Arbeitsflüssigkeitsaufnahmebehälter (147) steht und der Vorrichtungskoordinator (601) in mindestens einigen Situationen betriebsfähig ist, unterschiedliche Steuersignale zu einer ersten und einer zweiten Gruppe von einer oder mehreren der Energiegewinnungsvorrichtungen zu senden, um die erste Gruppe zu veranlassen, ihre entsprechenden Arbeitsflüssigkeitsaufnahmebehälter zu einem größeren Anteil ihrer maximalen Kapazität zu füllen, als die zweite Gruppe, während beide Gruppen von Energiegewinnungsvorrichtungen Energie aus der erneuerbaren Energiequelle gewinnen.

16. Installation nach Anspruch 15, wobei der Vorrichtungskoordinator (601) betriebsfähig ist, eine temporäre Änderung in der Menge an Energie von dem Energiefluss vorherzusagen, der von einer Gruppe von einer oder mehreren Energiegewinnungsvorrichtungen empfangen wird, und die Steuersignale zu der entsprechenden Gruppe von einer oder mehreren Energiegewinnungsvorrichtungen zu ändern, um die Gruppe von einer oder mehreren Energiegewinnungsvorrichtungen zu veranlassen, vor der vorhergesagten temporären Änderung in der Menge an zu empfangender Energie die Menge an Arbeitsflüssigkeit zu reduzieren, die in ihren entsprechenden Arbeitsflüssigkeitsaufnahmebehältern (147) gespeichert ist.

17. Verfahren zum Steuern einer Energiegewinnungsvorrichtung zum Gewinnen von Energie aus einem Energiefluss von einer erneuerbaren Energiequelle, wobei die Vorrichtung eine Steuerung (112) und einen Hydraulikkreis aufweist, und wobei der Hydraulikkreis aufweist:
mindestens eine Hydraulikpumpe (129), die durch eine rotierende Welle (125) angetrieben wird, wobei die rotierende Welle durch eine erneuerbare Energiequelle angetrieben wird,
mindestens einen Hydraulikmotor (131), der eine Last antreibt,
einen Niederdruckverteiler (135) zum Leiten von Arbeitsflüssigkeit von dem mindestens einen Hydraulikmotor zu der mindestens einen Hydraulikpumpe,
und einen Hochdruckverteiler (133) zum Leiten von Flüssigkeit von der Hydraulikpumpe zu dem Hydraulikmotor,
wobei die Hydraulikpumpe und der Hydraulikmotor jeweils mehrere Arbeitskammern (202) von zyklisch variierendem Volumen und mehrere Ventile zum Regulieren der Nettoverdrängung der Arbeitsflüssigkeit zwischen jeder Arbeitskammer und den Hoch- und Niederdruckverteilern aufweisen und mindestens ein mit jeder Arbeitskammer verbundenes Ventil ein elektronisch gesteuertes Ventil (214, 220) ist, wobei die elektronisch gesteuerten Ventile durch die Steuerung betrieben werden können, um das Volumen der Arbeitsflüssigkeit auszuwählen, das von jeder Arbeitskammer bei jedem Arbeitszyklus des Volumens der Arbeitskammer verdrängt wird, und dadurch die Nettoverdrängungsrate der Arbeitsflüssigkeit durch die mindestens eine Hydraulikpumpe und den mindestens einen Hydraulikmotor zu regulieren,
wobei die Vorrichtung ferner mindestens einen Arbeitsflüssigkeitsaufnahmebehälter (147) aufweist, der in Verbindung mit dem Hochdruckverteiler steht,
eine Eingangsschnittstelle zum Empfangen eines Steuersignals von einem Vorrichtungskoordinator (601) einer Energiegewinnungsinstallation, die mehrere der Energiegewinnungsvorrichtungen aufweist,
eine Ausgangsschnittstelle zum Senden eines Füllmengenzustandssignals, das mit einem Volumen der Hydraulikflüssigkeit in dem Arbeitsflüssigkeitsaufnahmebehälter verbunden ist, wobei die Eingangsschnittstellen und die Ausgangsschnittstellen der Energiegewinnungsvorrichtungen in Kommunikation mit dem Vorrichtungskoordinator sind, um dem Vorrichtungskoordinator Informationen bereitzustellen und zu ermöglichen, dass die Energiegewinnungsvorrichtungen gemeinsam gesteuert werden können,
wobei das Verfahren durch das Empfangen eines Steuersignals und Auswählen der relativen Verdrängungsrate der Arbeitsflüssigkeit durch die mindestens eine Hydraulikpumpe und den mindestens einen Hydraulikmotor ansprechend auf das empfangene Steuersignal gekennzeichnet ist.

18. Verfahren zum Steuern von einer Energiegewinnungsvorrichtung nach Anspruch 17, wobei mindestens in einer Betriebsart die relative Verdrängungsrate der Arbeitsflüssigkeit durch die mindestens eine Hydraulikpumpe (129) und den mindestens einen Hydraulikmotor (131) durch Variieren der Verdrängungsrate der Arbeitsflüssigkeit durch den mindestens einen Hydraulikmotor unabhängig von dem Variieren der Verdrängungsrate der Arbeitsflüssigkeit durch die mindestens eine Hydraulikpumpe bestimmt wird.

## Revendications

1. Dispositif d'extraction d'énergie pour extraire de l'énergie à partir d'un flux d'énergie provenant d'une source d'énergie renouvelable, le dispositif comprenant un dispositif de commande (112) et un circuit hydraulique,
le circuit hydraulique comprenant:
au moins une pompe hydraulique (129) entraînée par un arbre rotatif (125), l'arbre rotatif étant entraîné par une source d'énergie renouvelable,
au moins un moteur hydraulique (131) entraînant une charge,
un collecteur à basse pression (135) pour acheminer un fluide de travail depuis ledit au moins un moteur hydraulique jusqu'à ladite au moins une pompe hydraulique, et
un collecteur à haute pression (133) pour acheminer un fluide depuis ladite au moins une pompe hydraulique jusqu'audit au moins un moteur hydraulique;
dans lequel la ou chaque pompe hydraulique et le ou chaque moteur hydraulique comprennent chacun une pluralité de chambres de travail (202) de volume cycliquement variable et une pluralité de soupapes pour réguler le déplacement net de fluide de travail entre chaque chambre de travail et les collecteurs à haute pression et à basse pression, au moins une soupape associée à chaque chambre de travail étant une soupape à commande électronique (214, 220), lesdites soupapes à commande électronique pouvant être actionnées par le dispositif de commande pour sélectionner le volume de fluide de travail déplacé par chacune desdites chambres de travail lors de chaque cycle de volume de chambre de travail et pour réguler ainsi le débit de déplacement net de fluide de travail par ladite au moins une pompe hydraulique et ledit au moins un moteur hydraulique;
le dispositif comprenant en outre au moins un réceptacle de fluide de travail (147) qui est en communication avec le collecteur à haute pression, et **caractérisé en ce qu'**il comprend une interface d'entrée pour recevoir un signal de commande en provenance d'un coordinateur de dispositifs (601) d'une installation d'extraction d'énergie comprenant une pluralité desdits dispositifs d'extraction d'énergie,
une interface de sortie pour envoyer un état d'un signal de charge relatif à un volume de fluide hydraulique dans le réceptacle de fluide de travail, les interfaces d'entrée et les interfaces de sortie desdits dispositifs d'extraction d'énergie étant en communication avec le coordinateur de dispositifs pour fournir des informations au coordinateur de dispositifs, afin de permettre aux dispositifs d'extraction d'énergie d'être commandés de concert, et
dans lequel le dispositif de commande peut être actionné pour sélectionner le débit de déplacement de fluide de travail par ladite au moins une pompe hydraulique et ledit au moins un moteur hydraulique de telle sorte que le débit de déplacement relatif de fluide de travail par ladite au moins une pompe hydraulique et ledit au moins un moteur hydraulique soit sensible au signal de commande reçu à travers l'interface d'entrée.

2. Dispositif d'extraction d'énergie selon la revendication 1, dans lequel les signaux de commande reçus par l'interface d'entrée comprennent les uns et/ou les autres parmi des instructions pour changer un ou plusieurs mode(s) de fonctionnement du dispositif de commande (112) et de paramètres pris en compte par le dispositif de commande.

3. Dispositif d'extraction d'énergie selon la revendication 1, dans lequel ledit au moins un réceptacle de fluide de travail (147) comprenant au moins un récipient pressurisable approprié pour stocker un fluide hydraulique sous pression, dans lequel la pression du fluide hydraulique augmente avec un accroissement du stockage de fluide hydraulique par le récipient pressurisable.

4. Dispositif d'extraction d'énergie selon la revendication 1, dans lequel l'état d'un signal de charge relatif au volume de fluide hydraulique à l'intérieur dudit au moins un réceptacle de fluide de travail (147) est une mesure d'un paramètre qui varie avec le volume de fluide hydraulique à l'intérieur dudit au moins un réceptacle de fluide de travail.

5. Dispositif d'extraction d'énergie selon la revendication 1, dans l'état d'un signal de charge est représentatif d'une ou de plusieurs parmi la pression dans le collecteur à haute pression (133), la pression dans ledit au moins un réceptacle de fluide de travail (147), la quantité de fluide de travail stockée dans ledit au moins un réceptacle de fluide de travail, et la quantité de capacité non remplie dudit au moins un réceptacle de fluide de travail.

6. Dispositif d'extraction d'énergie selon la revendication 1, comprenant en outre une interface de sortie à travers laquelle un signal d'absorption de puissance, relatif à la puissance reçue par le dispositif d'extraction d'énergie à travers une ou plusieurs de ladite au moins une pompe hydraulique (129), est généré lors de l'utilisation.

7. Dispositif d'extraction d'énergie selon la revendication 6, dans lequel le signal d'absorption de puissance en communication avec les interfaces d'entrée et de sortie est un signal représentatif de la vitesse angulaire des aubes de turbine, de la vitesse du vent ou du débit d'eau, du pas des pales, du couple de l'arbre rotatif ou du déplacement de fluide par la pompe (129).

8. Dispositif d'extraction d'énergie selon la revendication 1, dans lequel le dispositif d'extraction d'énergie présente un premier mode de fonctionnement dans lequel ledit au moins un moteur hydraulique (131) est actionné alternativement dans un premier état dormant et un deuxième état actif, et un deuxième mode de fonctionnement dans lequel le dispositif de commande (112) détermine le débit de déplacement relatif de fluide de travail par ladite au moins une pompe hydraulique et ledit au moins un moteur hydraulique (131) en faisant varier le débit de déplacement de fluide de travail par ladite au moins une pompe hydraulique, et qui fonctionne par défaut dans le premier mode de fonctionnement, mais qui fonctionne dans le deuxième mode de fonctionnement en réaction à la détermination que ledit au moins un réceptacle de fluide de travail (147) est proche de sa capacité.

9. Dispositif d'extraction d'énergie selon la revendication 8, dans lequel le réceptacle de liquide hydraulique (147) est proche de sa capacité lorsque la pression dans le collecteur à haute pression (133) dépasse un seuil.

10. Dispositif d'extraction d'énergie selon la revendication 1, dans lequel le dispositif de commande détermine le débit de déplacement relatif de fluide de travail par ladite au moins une pompe hydraulique (129) et ledit au moins un moteur hydraulique (131) de telle sorte que la pression dans le collecteur à haute pression tende vers une pression cible, à la suite de quoi, dans au moins un mode de fonctionnement, la pression cible est déterminée par un signal de commande reçu.

11. Dispositif d'extraction d'énergie selon la revendication 1, dans lequel le dispositif d'extraction d'énergie est un générateur de turbine éolienne.

12. Installation comprenant une pluralité desdits dispositifs d'extraction d'énergie selon la revendication 1 et un coordinateur de dispositifs (601), dans laquelle le coordinateur de dispositifs est en communication avec la pluralité de dispositifs d'extraction d'énergie et peut être actionné pour transmettre lesdits signaux de commande à des groupes individuels d'un ou de plusieurs desdits dispositifs d'extraction d'énergie.

13. Installation selon la revendication 12, dans laquelle les interfaces d'entrée et les interfaces de sortie de la pluralité de dispositifs d'extraction d'énergie sont en communication avec le coordinateur de dispositifs (601) afin de fournir des informations au coordinateur de dispositifs et de recevoir des signaux de commande en provenance du coordinateur de dispositifs, dans le but de pouvoir commander de concert une pluralité de dispositifs d'extraction d'énergie à l'intérieur d'une installation afin d'optimiser un ou plusieurs paramètre(s) de l'installation dans son ensemble.

14. Installation selon la revendication 12, dans laquelle le coordinateur de dispositifs est configuré de manière à générer une sortie de puissance plus lisse, ou à garder en réserve une quantité d'énergie prédéterminée dans le but d'être capable de fournir temporairement une puissance supplémentaire à un réseau électrique sur demande, ou d'optimiser l'extraction de puissance des dispositifs d'extraction d'énergie globalement face à des contraintes supplémentaires données.

15. Installation selon la revendication 12, dans laquelle ledit collecteur à haute pression de chacun de la pluralité de dispositifs d'extraction d'énergie est en communication avec au moins un réceptacle de fluide de travail respectif (147), et le coordinateur de dispositifs (601) peut être actionné, au moins dans certaines circonstances, pour transmettre différents signaux de commande à un premier groupe et un deuxième groupe d'un ou de plusieurs desdits dispositifs d'extraction d'énergie de manière à amener le premier groupe à remplir ses réceptacles de fluide de travail respectifs dans une plus grande proportion de leur capacité maximale par rapport au deuxième groupe, alors que les deux groupes de dispositifs d'extraction d'énergie extraient de l'énergie à partir de la source d'énergie renouvelable.

16. Installation selon la revendication 15, dans laquelle le coordinateur de dispositifs (601) peut être actionné pour prédire un changement temporaire dans la quantité d'énergie provenant du flux d'énergie qui sera reçue par un groupe d'un ou de plusieurs dispositif (s) d'extraction d'énergie et pour changer les signaux de commande au groupe respectif d'un ou de plusieurs dispositif(s) d'extraction d'énergie de manière à amener le groupe d'un ou de plusieurs dispositif(s) d'extraction d'énergie à réduire la quantité de fluide de travail stockée dans leurs réceptacles de fluide de travail respectifs (147) préalablement au changement temporaire prédit dans la quantité d'énergie à recevoir.

17. Procédé de commande d'un dispositif d'extraction d'énergie pour extraire de l'énergie à partir d'une source d'énergie renouvelable, le dispositif comprenant un dispositif de commande (112) et un circuit hydraulique,
le circuit hydraulique comprenant:
au moins une pompe hydraulique (129) entraînée par un arbre rotatif (125), l'arbre rotatif étant entraîné par une source d'énergie renouvelable,
au moins un moteur hydraulique (131) entraînant une charge,
un collecteur à basse pression (135) pour acheminer un fluide de travail depuis ledit au moins un moteur hydraulique jusqu'à ladite au moins une pompe hydraulique, et
un collecteur à haute pression (133) pour acheminer un fluide depuis ladite au moins une pompe hydraulique jusqu'audit au moins un moteur hydraulique;
dans lequel la pompe hydraulique et le moteur hydraulique comprennent chacun une pluralité de chambres de travail (202) de volume cycliquement variable et une pluralité de soupapes pour réguler le déplacement net de fluide de travail entre chaque chambre de travail et les collecteurs à haute pression et à basse pression, au moins une soupape associée à chaque chambre de travail étant une soupape à commande électronique (214, 220), lesdites soupapes à commande électronique pouvant être actionnées par le dispositif de commande pour sélectionner le volume de fluide de travail déplacé par chacune desdites chambres de travail lors de chaque cycle de volume de chambre de travail et pour réguler ainsi le débit de déplacement net de fluide de travail par ladite au moins une pompe hydraulique et ledit au moins un moteur hydraulique;
le dispositif comprenant en outre au moins un réceptacle de fluide de travail (147) qui est en communication avec le collecteur à haute pression,
une interface d'entrée pour recevoir un signal de commande en provenance d'un coordinateur de dispositifs (601) d'une installation d'extraction d'énergie comprenant une pluralité desdits dispositifs d'extraction d'énergie,
une interface de sortie pour envoyer un état d'un signal de charge relatif à un volume de fluide hydraulique dans le réceptacle de fluide de travail, les interfaces d'entrée et les interfaces de sortie desdits dispositifs d'extraction d'énergie étant en communication avec le coordinateur de dispositifs pour fournir des informations au coordinateur de dispositifs, afin de permettre aux dispositifs d'extraction d'énergie d'être commandés de concert,
le procédé étant **caractérisé par** la réception d'un signal de commande et par la sélection du débit de déplacement relatif de fluide de travail par ladite au moins une pompe hydraulique et ledit au moins un moteur hydraulique en réponse au signal de commande reçu.

18. Procédé de commande d'un dispositif d'extraction d'énergie selon la revendication 17, dans lequel, au moins dans un mode de fonctionnement, le débit de déplacement relatif de fluide de travail par ladite au moins une pompe hydraulique (129) et ledit au moins un moteur hydraulique (131) est déterminé en faisant varier le débit de déplacement de fluide de travail par ledit au moins un moteur hydraulique indépendamment de la variation du débit de déplacement de fluide de travail par ladite au moins une pompe hydraulique.
